# FASCICULE DE BREVET EUROPEEN

(11) **EP 0 986 781 B1**
(45) Date de publication et mention de la délivrance du brevet: **28.01.2004**
(21) Numéro de dépôt: 98924395.1
(22) Date de dépôt: 06.05.1998
(51) Int. Cl.: G06F 3/033, G06F 17/30

(54) **PROCEDE D'ORGANISATION ET DE CONSULTATION DE DONNEES ELECTRONIQUES DANS L'ENVIRONNEMENT D'UNE MEDIATHEQUE**
VERFAHREN ZUM ORGANISIEREN VON UND ZUM NACHSCHLAGEN IN ELEKTRONISCHEN DATEN IN DER UMGEBUNG EINER MEDIATHEK
METHOD FOR ORGANISING AND CONSULTING ELECTRONIC DATA IN A MEDIA LIBRARY ENVIRONMENT

(30) Priorité: 03.06.1997 WO PCT/FR97/00983
(43) Date de publication de la demande: 22.03.2000
(73) Titulaire: Keeboo Corporation, Redwood City, CA 94063 (US)
(72) Inventeur: SAFARS, Michel, F-91190 Gif sur Yvette (FR); FRACHON, Fabrice, F-91190 Gif sur Yvette (FR); SILVESTRE DE SACY NOUGARET DURAFORT, Pierre, F-75009 Paris (FR); VERRECCHIA, Thierry, F-95000 Cergy (FR); LELONG, Philippe, F-75012 Paris (FR)
(74) Mandataire: Pontet, Bernard
(86) Numéro de dépôt international: PCT/FR1998/000917
(87) Numéro de publication internationale: WO 1998/055915

(56) Documents cités:
- EP-A- 0 472 070
- WO-A-92/08199
- CARD S K ET AL: "THE WEBBOOK AND THE WEB FORAGER: AN INFORMATION WORKSPACE FOR THE WORLD-WIDE WEB" COMMON GROUND. CHI '96 CONFERENCE PROCEEDINGS, CONFERENCE ON HUMAN FACTORS IN COMPUTING SYSTEMS VANCOUVER, APRIL 13 - 18, 1996,13 avril 1996, pages 111-117, XP000657809 TAUBER M J (ED )
- TSUNEO KATSUYAMA ET AL: "MULTIMEDIA "PAPER" SERVICES/HUMAN INTERFACES AND MULTIMEDIA COMMUNICATION WORKSTATION FOR BROADBAND ISDN ENVIRONMENTS" IEICE TRANSACTIONS ON COMMUNICATIONS, vol. E76-B, no. 3, 1 mars 1993, pages 220-228, XP000303994
- "BeOS Makes a Splash" PC MAGAZINE, vol. 16, no. 5, 4 mars 1997, page 9 XP002054815
- ROGERS E H: "NOTEMAKER: A HYPER-DESIGN NOTEBOOK TO SUPPORT INFORMAL COMMUNICATION IN THE ENGINEERING DESIGN PROCESS" ENGINEERED COMMUNICATION, ORLANDO, OCT. 30 - NOV. 1, 1991, vol. 1, 30 octobre 1991, pages 141-144, XP000319134 INSTITUTE OF ELECTRICAL AND ELECTRONICS ENGINEERS
- "SEARCHING FOR ANNOTATION IN DOCUMENTS ON A COMPUTER" RESEARCH DISCLOSURE, no. 318, 1 octobre 1990, page 816 XP000148656

## Description

La présente invention concerne un procédé d'organisation et de consultation de données électroniques dans l'environnement d'une médiathèque.

La multiplication et le développement des supports d'informations (Mail, Web, NewsGroup...), des réseaux de communication tels qu'Internet ou des bases documentaires des entreprises ont conduit à une augmentation considérable des masses de données, des documents et de l'information en général. Les utilisateurs de ces nouvelles techniques (informaticiens ou non) sont confrontés à des problèmes de consultation, stockage, organisation, travail, annotation, partage et transmission de cette masse d'information.

Le rangement et la gestion de documents collectés à partir de tout type de support tel qu'un réseau constituent bien souvent un véritable problème. Il existe diverses approches d'optimisation du rangement qui font référence au paradigme du livre.

On peut notamment citer les travaux de Xerox PARC, Bell Labs (smart paper), Interval Research (Paul Allen et Rob Tow), MIT Media Lab, et Modern Age Books, Inc. Les produits issus de ces travaux ont en commun de proposer une métaphore du livre et des outils permettant une navigation au sein de livres électroniques.

On connaît déjà le produit "SuperBook Document browser" qui fournit un environnement interactif pour l'analyse de données et des représentations graphiques. Ce produit procure une table des matières, un système d'indexation, des annotation et des fonctions d'hypertexte.

On connaît aussi les produits "WebBook" et "Web Forager" conçus par Xerox Palo Alto Research Center. Le WebBook est un livre interactif tridimensionnel constitué de pages HTML. Le Web Forager est une application qui insère le WebBook et d'autres objets dans un espace de travail tridimensionnel hiérarchique. Le WebBook exploite la métaphore du livre et réalise un regroupement de pages Web. Le WebBook précharge un ensemble de pages web et les visualise sous la forme d'un livre physique simulé. Des liens peuvent être codés à l'aide de couleurs différentes, pour distinguer par exemple des liens entre page et de liens à des références externes au livre. Lorsqu'un livre est refermé, un marque-page est automatiquement placé sur la dernière page consultée. Les livres peuvent être pourvus de marque-page et être disposés sur une étagère. Lorsqu'un livre est retiré de son étagère, il est directement rouvert à la dernière page consultée. Ce produit permet de réaliser des "Topic WebBooks", des "Hot List Books", ou des "Search Reports".

Le concept WebBook exploite la métaphore du livre dans la suite de travaux antérieurs tels que ceux réalisés par Brown ou Card et Henderson. A ce sujet, on peut citer le document WO 92/08199 qui divulgue un procédé pour implémenter une métaphore d'un livre dans lequel tous les documents stockés dans un ordinateur sont intégrés au sein d'un document unique. On peut également citer le système TabWorks développé par Xerox.
Mais l'utilisateur de ces produits exploitant la métaphore du livre reste confronté au problème d'un rangement efficace et aisé des documents rassemblés dans les différents livres de sa bibliothèque. A chaque création d'un nouveau livre, se pose la question d'un choix de structure pour ce livre et une simple organisation en chapitres et sous-chapitres ne permet pas de répondre à la complexité des problèmes de rangement posés qui en outre diffèrent en fonction de l'origine et de la nature des documents collectés.

Il existe également, pour les systèmes de gestion de documents (DMS: Document Management System), un standard d'intégration de gestion de documents appelé ODMA (Open Document Management API) permettant à des applications et à des systèmes de gestion de documents une interopérabilité à travers une unique interface API de haut niveau indépendante de toute plate-forme et de tout langage.

Le standard ODMA spécifie un ensemble d'interfaces que les applications peuvent utiliser pour réaliser des opérations d'un système de gestion de documents DMS. Par ailleurs, ou peut citer les standards de gestion de base de données du type ODBC (Open Data Base Connectivity: connectivité pour base de données ouverte) ou JDBC (Java Data Base Connectivity: connectivité pour base de données en Java). On peut en outre citer des logiciels téléchargeables du type "plug-in" qui constituent également des interfaces d'accès à des documents, indépendants de toute plate-forme.

Cependant, aucun de ces produits ou standards ne permet de répondre au problème spécifique du rangement et de la gestion de documents dans le contexte spécifique de la métaphore du livre.

Le but de la présente invention est de remédier à ces inconvénients en proposant un procédé d'organisation et de consultation de données électroniques dans l'environnement d'une médiathèque, qui permette une réalisation simple et rapide de livres à partir d'ensembles de documents collectés à partir de diverses sources d'informations.

Ceci est obtenu avec un procédé pour organiser et consulter des données électroniques dans l'environnement d'une médiathèque, ces données électroniques provenant d'une pluralité de sources et étant fournies sous des formes diverses .

Le procédé suivant l'invention est défini dans les revendications.

Le procédé d'organisation et de consultation selon l'invention inclut un mécanisme de consultation d'une source de données électroniques basé sur la métaphore du livre.

Dans un exemple de mise en oeuvre du procédé d'organisation et de consultation selon l'invention, celui-ci comprend en outre une génération incrémentale de livres et de données persistantes à partir de données électroniques provenant de mécanismes de type "Push".

Par ailleurs, le procédé d'organisation et de consultation selon l'invention peut être avantageusement agencé pour procurer une feuille ou un intercalaire volant permettant de conserver une information à l'écran pendant la consultation d'autres informations accédées depuis des liens hypertextes ou par tout autre mécanisme.

D'autres particularités et avantages de l'invention apparaîtront encore dans la description ci-après . Aux dessins annexés donnés à titre d'exemples non limitatifs:
- la figure 1 décrit un modèle objet des livres mis en oeuvre dans le procédé d'organisation et de consultation selon l'invention;
- la figure 2 illustre un modèle de visualisation des pages mis en oeuvre dans le procédé d'organisation et de consultation selon l'invention;
- la figure 3 est une copie d'écran obtenue avec le procédé selon l'invention, illustrant une visualisation en mode bibliothèque;
- la figure 4 est une copie d'écran obtenue avec le procédé selon l'invention, illustrant une visualisation en mode lutrin, dans un premier exemple de rendu;
- la figure 5 est une copie d'écran obtenue avec le procédé selon l'invention, illustrant une visualisation en mode lutrin, dans un second exemple de rendu;
- la figure 6 est une copie d'écran obtenue avec le procédé selon l'invention, illustrant une visualisation en mode livre ;
- la figure 7 est une copie d'écran obtenue avec le procédé selon l'invention, illustrant une visualisation en mode page ;
- les figures 8A à 8D sont des copies d'écran obtenues avec le procédé selon l'invention, illustrant une palette d'outils, dans lesquelles les onglets «Annotations», «Outils», «Livres» et «Modes» sont successivement activés; et
- la figure 9 illustre le concept de feuilles volantes mis en oeuvre dans le procédé selon l'invention.

Dans la description suivante, on utilise le livre et les documents comme éléments de référence. Cela pourrait être des disques ou tout autre élément contenant de l'information. Il faut ajouter que tout type de rendu de l'information n'enlève en rien du caractère innovant de la présente invention. On pourra notamment imaginer des représentations dans des espaces tridimensionnels des éléments décrits par la suite. Le procédé suivant pourra aussi bien être appliqué sur des ordinateurs personnels, ordinateurs portables et de poches, assistants personnels, WebTVs... On pourra également l'imaginer sous la forme d'un shell graphique ou encore comme bureau de travail pour les systèmes d'exploitation modernes.

On va maintenant décrire un exemple de mise en oeuvre du procédé d'organisation et de consultation selon l'invention, en présentant en premier lieu l'organisation et la présentation des informations.

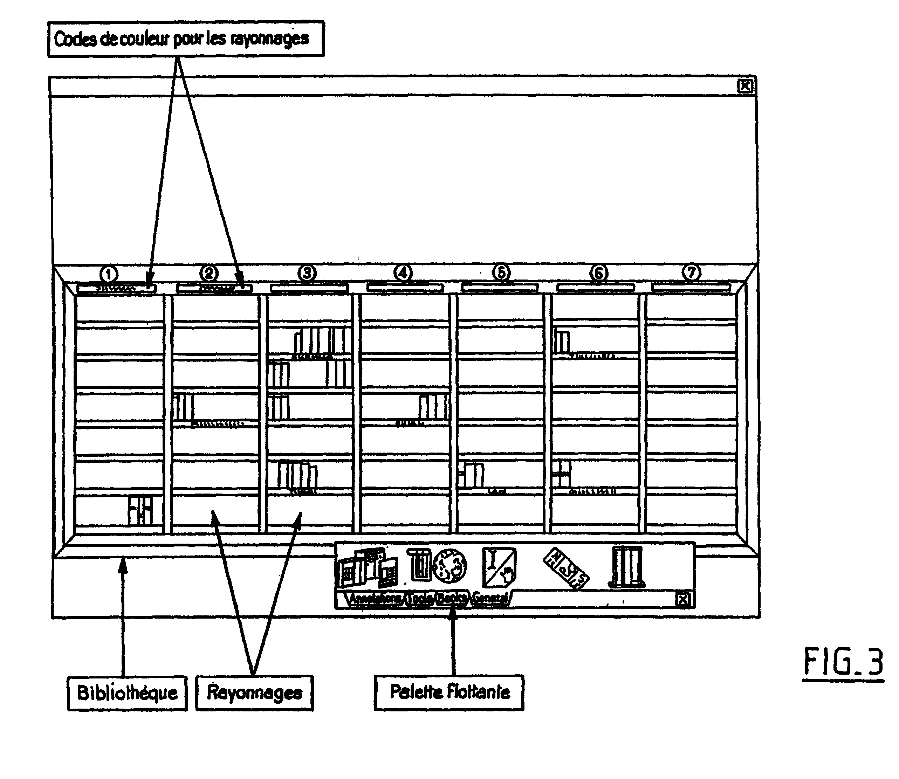

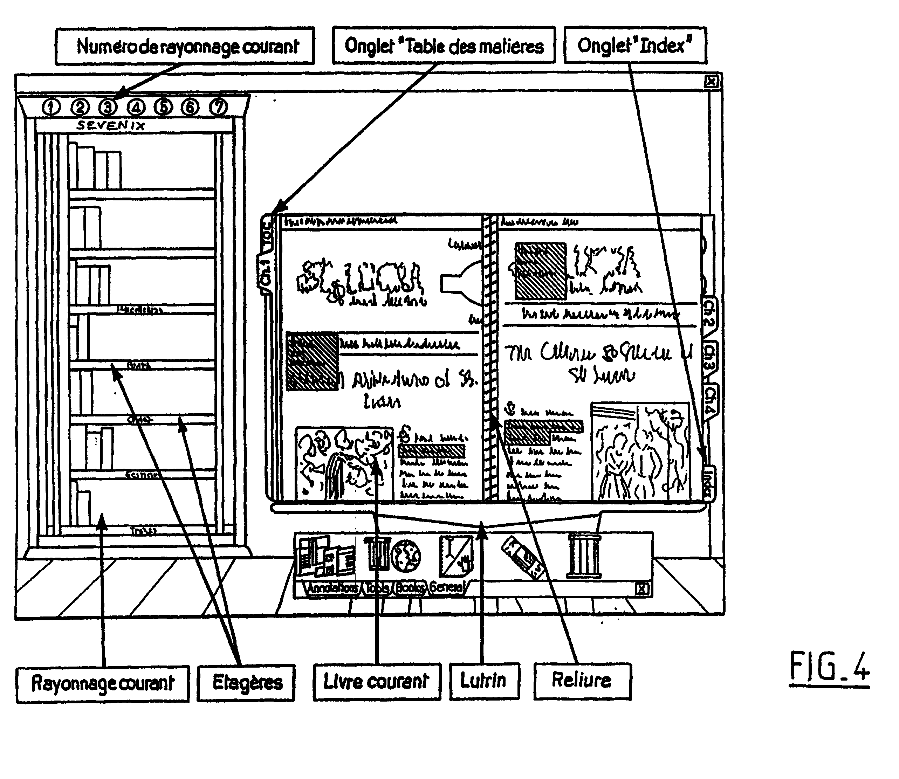

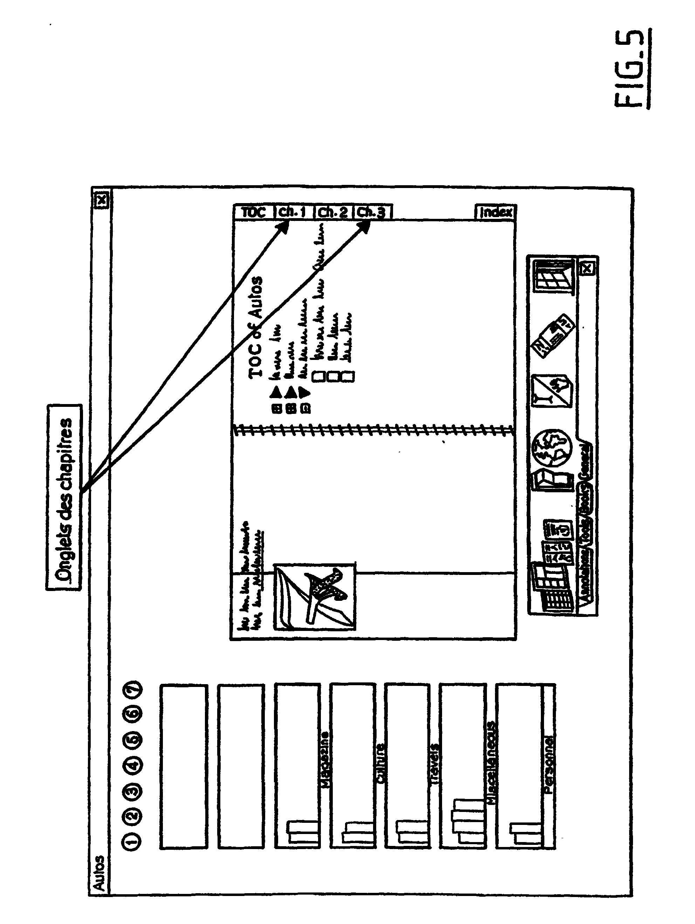

Le procédé d'organisation et de consultation selon l'invention permet de ranger des informations dans une bibliothèque de 7 rayonnages, comme l'illustre la figure 3. Chaque rayonnage possède un titre affiché en haut du rayonnage, il suffit de cliquer sur le titre pour le modifier directement. En mode Lutrin, un seul rayonnage est présent à la fois à l'écran, en référence aux figures 4 et 5. On devine de chaque côté les rayonnages voisins, sur lesquels il suffit de cliquer pour passer d'un rayonnage à l'autre. Une couleur est associée à chaque rayonnage.

Chaque rayonnage comporte 7 étagères. Chaque étagère possède un titre affiché sur sa tranche, il suffit de cliquer sur le titre pour le modifier directement. Chaque étagère peut contenir plusieurs livres, 14 par exemple. Il existe une étagère administrative distincte des rayonnages réservés à l'utilisateur. L'un des deux casiers de cette étagère administrative peut recevoir temporairement les livres de travail (7 au maximum - si l'utilisateur y dépose un huitième livre, le procédé de gestion selon l'invention remet automatiquement dans la bibliothèque le livre en cours le moins récemment utilisé). L'autre casier de l'étagère administrative rassemble les livres administratifs du procédé de gestion selon l'invention, sur lesquels nous reviendrons. Cette étagère administrative est intégrée au sein de la palette d'outils pour permettre son accès instantané dans l'ensemble des modes de visualisation, en référence par exemple à la palette flottante.

L'utilisateur peut utiliser des presse-livres (objets graphiques) pour regrouper quelques livres au sein d'une même étagère.

La tranche du livre est une représentation visuelle choisie lors de sa création (et modifiable par la suite). Son titre s'affiche dans une bulle d'aide lorsque la souris passe au-dessus du livre. La première de couverture comporte le titre du livre, et une éventuelle illustration fournie par l'auteur. Titres et illustrations sont modifiables par simple clic sur les titres ou double clic sur l'illustration. La deuxième de couverture comporte l'identification de l'auteur (avec son adresse électronique et éventuellement une photo) et un texte court optionnel de résumé ou de présentation du livre. La troisième et la quatrième de couverture ne sont jamais affichées.

La première page du livre est son sommaire, elle possède un onglet. Toutes les pages du livre y sont référencées, et regroupées par l'auteur en chapitres et sous-chapitres. La mise en page de ce sommaire est classique (indentation, pointillés de suite, etc.). Seuls les chapitres de niveau 1 possèdent un onglet, et sont affichés lors de la première ouverture du livre. Le lecteur peut afficher ou masquer le contenu détaillé d'un chapitre ou d'un sous-chapitre en cliquant sur une icône symbolisant un chapitre. Lorsqu'il revient à un livre déjà consulté, il retrouve le sommaire dans l'état où il l'avait laissé. Si le livre est modifiable, le lecteur peut réorganiser le sommaire par glisser-déposer, il peut créer un nouveau chapitre ou sous-chapitre. Les pages comportant des annotations sont repérées visuellement dans le sommaire.

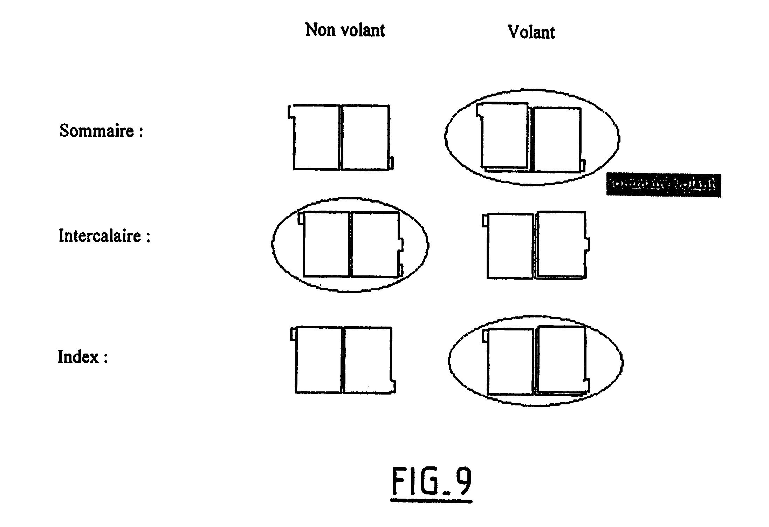

A partir du sommaire, l'utilisateur peut passer directement à n'importe quelle page du livre en double-cliquant sur sa référence (le livre s'ouvre à la page correspondante et le sommaire disparaît). Pour naviguer dans le livre à partir du sommaire, le lecteur a la possibilité de transformer la page du sommaire en intercalaire « volant » placé au-dessus de la page gauche du livre, en référence à la figure 9. Bien que le sommaire soit volant, on peut toujours naviguer dans le livre et rajouter de nouvelles pages. Pour le refermer, afin qu'il se remette à sa place, il suffit de cliquer sur une icône prévue à cet effet. Cette icône se trouve sur la page de sommaire.

La dernière page du livre est son index, elle possède un onglet (son fonctionnement est décrit plus loin) .

Le contenu et l'organisation d'un livre sont modifiables si l'utilisateur en est l'auteur, ou si l'auteur lui a transmis ce livre en indiquant explicitement qu'il pouvait être modifié par le destinataire.

Lorsque l'utilisateur choisit un livre, celui-ci s'ouvre toujours à la page où il était ouvert lorsque l'utilisateur l'avait fermé pour la dernière fois. Une fonction de feuilletage accéléré permet de parcourir rapidement un livre et de s'arrêter lorsque la page recherchée est identifiée. La spirale centrale du livre est un « ascenseur » proportionnel au nombre de pages du livre, elle permet de passer directement à une page donnée. Lorsque l'utilisateur place le curseur de la souris sur cette spirale, une bulle d'aide affiche dynamiquement le numéro de la page correspondant à la position du curseur sur la hauteur de la spirale. Elle peut également, en suivant les préférences de l'utilisateur, afficher un aperçu du livre à la page correspondante permettant un repérage rapide de la page l'intéressant. Cette spirale centrale est glissante : on peut réduire la largeur d'une des deux pages au profit de l'autre afin d'améliorer la lisibilité de cette dernière.

Un livre peut rassembler un nombre non limité de pages contenant des documents de types différents.

Chaque page d'un livre représente un document complet. Une page peut contenir et afficher n'importe quel document bureautique classique, ou une page HTML d'un site Web, ou tout autre document provenant de l'une des sources gérées par le procédé d'organisation et de consultation selon l'invention. Si le livre est modifiable, l'utilisateur peut demander à modifier le document affiché dans une page si l'application correspondant au type du document est disponible sur le poste de travail. Cette application est alors lancée par le procédé d'organisation et de consultation selon l'invention sur ce document pour en permettre la modification. L'application est lancée de façon séparée, la modification ne se fait pas dans le procédé d'organisation et de consultation selon l'invention, qui n'est pas un outil d'édition mais d' organisation. Cependant nous n'excluons pas la possibilité d'éditer directement des documents depuis l'outil. Lorsque l'utilisateur revient au procédé d'organisation et de consultation selon l'invention, le logiciel recharge le document pour prendre en compte les éventuelles modifications.

Quel que soit le document contenu dans une page, et même si le livre n'est pas modifiable, l'utilisateur peut toujours associer différents types d'annotations à une page :
Des notes adhésives, en collant n'importe où sur la page un rectangle redimensionnable et déplaçable, dans lequel l'utilisateur peut taper un texte libre. La note adhésive peut dépasser du haut de la page, dans ce cas elle devient un signet sur lequel un texte court peut être placé (le corps du signet, c'est-à-dire la partie de la note adhésive qui n'est pas visible une fois le livre fermé, reste de dimension libre et peut contenir un texte plus long). En cliquant sur le signet l'utilisateur ouvre directement le livre à la page correspondante. Plusieurs couleurs sont proposées pour ces notes adhésives. Les notes adhésives ont également la caractéristique d'être opaques : elles laissent transparaître le document sur lequel elles sont collées.

Les notes adhésives multimédias permettent l'insertion de son, image, URL, etc.

*Des notes hypertextes* permettent le "saut" vers d'autres pages du même ou d'un autre livre.
Des mots-clés (7 au maximum), saisis dans un champ libre apparaissant en bas de chaque page, ou dans une note adhésive spécialisée dite « note à mots-clés ». Ces mots-clés qualifient le contenu de la page (thèmes, contacts, dossiers en cours, etc.).le procédé d'organisation et de consultation selon l'invention conserve dans son Catalogue la liste de tous les mots-clés apparaissant dans la bibliothèque. Quelques fonctions simples d'aide à la saisie peuvent ainsi être proposées : visualisation graphique de la reconnaissance d'un mot-clé existant, complétion des mots-clés, accès à la liste complète des mots-clés existants. Une fonction permet de supprimer dans un livre toutes les occurrences d'un mot-clé donné.

Des signets peuvent être placés au sommet d'une page et permettent d'identifier individuellement des pages. Quelques notes peuvent être placées dans ces signets.

La page de note est un cas particulier d'annotation. Il s'agit d'une page pouvant être insérée n'importe où dans un livre, et permettant de saisir du texte simple (aucune mise en forme particulière). Sa représentation graphique la distingue nettement des pages « normales » référençant un document. La page de note est aussi un cas particulier d'insertion d'une nouvelle page décrit plus loin.

Des gommettes se présentent sous la forme de petites icônes (formes géométriques colorées ou icônes figuratives) pouvant être collées n'importe où dans un livre mis en oeuvre dans le procédé d'organisation et de consultation selon l'invention, et pouvant faire l'objet d'une recherche. La liste des gommettes est gérée dans le Catalogue, de la même façon que la liste des mots-clés. L'utilisateur peut facilement importer les gommettes de son choix (en spécifiant un fichier graphique). Les tampons sont un cas particulier de gommette, ils sont transparents (« urgent », « confidentiel », etc.).

Le surligneur permet de sélectionner suivant une couleur spécifique différentes zones d'un document. Le surligneur dans la marge permet un coup de surligneur vertical de hauteur variable et pouvant être collé dans la marge d'un document.

Le procédé d'organisation et de consultation selon l'invention enregistre l'auteur et l'horodatage de chaque annotation. L'utilisateur a toujours la possibilité de masquer de façon temporaire les annotations du livre qu'il est en train de consulter.

Les différents éléments supprimés par l'utilisateur (livres, pages, annotations, etc.) sont placés dans une poubelle. La poubelle conserve ainsi un certain nombre de documents (défini dans une préférence), qu'il est possible de récupérer à tout moment. Il est également possible de vider la poubelle à tout moment.

En ce qui concerne l'insertion de documents, les pages se créent implicitement au fur et à mesure de l'ajout des documents dans le livre. Il existe quatre approches différentes pour trouver puis désigner un document à ajouter dans un livre :

Pour l'utilisation d'un document déjà localisé (glisser-déposer - drag & drop), ce document est déjà présent sur le bureau de l'utilisateur, qui le fait glisser sur un livre. Si le livre est ouvert, le document s'insère après la page active puis devient la page active.

Pour l'identification par la localisation (navigation), l'utilisateur se déplace à l'extérieur de sa bibliothèque jusqu'au document recherché, en naviguant dans la structure native d'organisation des documents : pour les fichiers, il s'agit de l'arborescence des dossiers accessibles sur le poste de travail ; pour les documents HTML, il s'agit du World Wide Web ; pour des documents partagés dans une entreprise, il peut s'agir de bases documentaires; pour le courrier électronique, il peut s'agir de dossiers de classement du courrier électronique.

Pour accéder à cette fonctionnalité, l'utilisateur doit ouvrir le Livre de Navigation (SurfBook) rangé sur l'étagère administrative. Le sommaire de la première page du livre de navigation comporte un chapitre pour chaque source de documents reconnue par le procédé d'organisation et de consultation selon l'invention : Web, Fichiers, bases documentaires, courrier électronique, etc. Chacun de ces chapitres est bien sûr associé à un intercalaire.

Afin de permettre une meilleure intégration du système dans l'existant, il est prévu l'insertion d'une fonction d'"envoi du document courant dans BooXeven" au sein des navigateurs existants. La page sera alors insérée à la fin du SurfBook. Cela permettra aux utilisateurs de conserver leur navigateur habituel tout en profitant de la puissance de BooXeven.

Pour une navigation sur le Web, en cliquant sur le chapitre (ou l'onglet) Web, le livre s'ouvre sur un navigateur Web fonctionnant en mode double page. S'il a déjà utilisé cet outil de navigation, l'utilisateur retrouve l'historique des pages déjà visualisées (la profondeur de cet historique est une préférence). Lorsqu'il clique sur un lien sur la page de gauche, la nouvelle page apparaît à droite. S'il clique sur un lien de la page de droite, celle-ci passe à gauche et la nouvelle page s'affiche à droite. Si l'utilisateur clique sur un lien URL pointant sur un document non HTML, on récupère ce document et on l'affiche normalement sur la page de droite. Si l'utilisateur clique sur un lien référençant une page déjà présente dans le livre de navigation, on passe à cette page sans changer l'ordre des pages.

La première page du chapitre Web est la page d'accueil d'un moteur de recherche public (Yahoo !, Lycos, etc., c'est une préférence de l'utilisateur). Lorsqu'il est sur le sommaire du livre de navigation, si l'utilisateur demande à voir le contenu détaillé du chapitre Web, le procédé d'organisation et de consultation selon l'invention lui affiche l'arborescence des n dernières pages Web consultées.

Pour une navigation dans les fichiers, la première page du chapitre Fichiers est l'arborescence des dossiers accessibles depuis le poste de travail. A partir de cette page, on peut naviguer avec la même approche que la navigation Web en double page : si on clique sur un dossier on affiche la liste des dossiers et documents qu'il contient. Si l'on clique sur un document on affiche son contenu. Si l'on clique à gauche le détail s'affiche à droite, si l'on clique à droite la page de droite passe à gauche et le détail s'affiche à droite. Si l'un des documents affichés contient un lien URL et que l'utilisateur clique sur ce lien, le document correspondant s'affiche normalement.

Le lecteur peut néanmoins afficher le contenu d'un dossier sans naviguer (sans changer de page), en cliquant sur une icône en forme de triangle (même type d'interface que sur le sommaire d'un livre).

Les pages ainsi consultées (sous-ensembles de l'arborescence ou contenu des fichiers) s'accumulent dans le livre, il est possible d'avancer ou de reculer (notamment en cliquant sur l'un des éléments du chemin d'accès courant rappelé en haut de chaque page). Le détail consultable depuis le sommaire du livre pour le chapitre Fichiers est constitué par ces pages de navigation récente dans le système de fichiers (comme pour le chapitre Web, le sommaire présente les dernières pages consultées). Lorsque l'utilisateur ferme le livre de navigation, on supprime toutes les pages intermédiaires de navigation dans l'arborescence des dossiers du système de fichier (on ne conserve que les pages terminales atteintes).

Pour une navigation dans les courriers électroniques (si l'utilisateur a choisi de conserver son logiciel de courrier électronique comme outil par défaut), un intercalaire Courrier est rajouté au SurfBook. La méthode de consultation est la même que celle de l'intercalaire Fichiers.

Pour une navigation dans une base documentaire, l'intercalaire Base documentaire liste les bases documentaires accessibles depuis le système. Le système peut s'interfacer aux bases documentaires en utilisant par exemple des mécanismes comme DMA ou ODMA. Ces outils permettent une navigation de manière similaire à celle d'une arborescence de fichiers : les mêmes mécanismes que précédemment sont repris. Ils disposent également de mécanismes de requêtes. Pour cela la première page dispose à la fois d'une visualisation de l'arborescence des bases documentaires et d'un espace permettant d'effectuer des requêtes. Lorsque l'utilisateur interroge la base, une page affichant les résultats est insérée dans le Livre de navigation. Ces résultats sont des liens hypertextes permettant le mode de visualisation précédemment décrit.

Pour l'insertion de documents numérisés, le système, en particulier dans le cadre d'entreprises, permet d'insérer des documents en les numérisant. L'intercalaire Numérisation offrira un accès à des interfaces standards de type TWAIN. Depuis cet intercalaire, l'utilisateur pourra demander la numérisation d'un nouveau document qui viendra s'insérer directement derrière cet intercalaire.

Pour l'insertion des pages dans un livre, lorsque l'utilisateur ouvre le livre de navigation, le livre sur lequel il était en train de travailler vient se ranger dans le casier des livres de travail (l'un des deux casiers de l'étagère administrative située dans la palette d'outils, toujours visible). Pendant la navigation, il lui suffira de faire glisser les pages qui l'intéressent du livre de navigation vers le livre en cours de son choix. Lorsqu'il « lâche » la page, un petit menu apparaît pour lui permettre de choisir l'emplacement où ranger la page : dans l'un des chapitres de niveau 1, après la dernière page consultée ou dans un chapitre « à classer » (qui sera créé dynamiquement en début de livre, et supprimé automatiquement lorsqu'il sera vide). L'affichage ou non de ce menu fait l'objet d'une préférence.

Dans le casier des livres de travail, le dernier livre ayant reçu des pages est « sélectionné », il est repérable facilement (en partie sorti de l'étagère, ou détouré, ou toute autre astuce d'affichage). Lorsqu'il y a un livre en cours sélectionné alors que l'on se trouve dans le livre de navigation, il suffit de cliquer sur une zone sensible (en haut à droite par exemple) de la page pour la déposer automatiquement dans le livre en cours sélectionné. L'objectif de cette fonctionnalité est d'offrir une alternative plus rapide que le glisser-déposer qui peut s'avérer fastidieux pour un grand nombre de pages. Son autre intérêt est de ne pas proposer à nouveau de choisir l'emplacement de rangement dans le livre de destination. Tant que l'on reste dans le même chapitre de destination, on utilise cette procédure rapide de collage automatique. S'il veut changer de chapitre de destination, l'utilisateur refait un glisser-déposer (sur le même livre ou sur un autre), et utilise le petit menu contextuel pour choisir son chapitre. Si l'utilisateur insère dans un livre un document qui s'y trouve déjà, le procédé d'organisation et de consultation selon l'invention l'en informe en lui disant dans quel(s) chapitre(s) il se trouve et lui demande confirmation de l'insertion multiple.

Dans le cas d'une navigation depuis un livre existant, lorsque l'utilisateur consulte l'un de ses livres et qu'il se place en mode connecté, il s'autorise à naviguer hors du livre quand il cliquera sur un lien hypertexte pointant sur un document (fichier, Web, courrier électronique) situé hors du livre. Lorsqu'il clique sur un tel lien, il insère en fait de nouvelles pages dans le livre en cours. Ces pages sont temporaires et pourront ou non être supprimées lorsque le livre sera fermé.

Si l'utilisateur clique sur un lien hypertexte référençant un document déjà utilisé dans l'un des livres de sa bibliothèque, et qu'il est en mode connecté (il s'autorise à sortir du livre en cours de consultation), le procédé d'organisation et de consultation selon l'invention lui indique que ce document est déjà utilisé, et lui propose soit d'aller dans le livre où il est utilisé (il peut y en avoir plusieurs, dans ce cas on les lui propose tous), soit de naviguer vers ce document et d'en insérer une copie dans le livre en cours. La réponse par défaut à cette question est une préférence (rester dans le livre en cours ou aller dans la bibliothèque).

Si l'URL référence un document existant dans un autre livre de la bibliothèque, le procédé de gestion selon l'invention propose au lecteur d'ouvrir ce livre ou d'insérer le document dans le livre en cours. S'il s'agit d'un document absent de la médiathèque et que l'on est en mode connecté, on peut soit rester dans le livre en cours et y insérer le document, soit passer dans le livre de navigation pour aller chercher ce nouveau document. Si on n'était pas en mode connecté, on s'arrête là avec un signal d'avertissement et / ou l'insertion d'une page expliquant le problème et / ou une explication de l'assistant.
Il est également possible d'insérer un document vierge d'un des types disponibles suivant les applications installées sur le système.

Dans le cas d'une identification par le contenu (recherche par mots-clés), l'utilisateur souhaite que le système lui présente les documents associés à un ou plusieurs mots-clés. Selon l'endroit où il se trouve et en fonction de l'endroit où il souhaite chercher (à l'intérieur ou à l'extérieur de la bibliothèque mise en oeuvre dans le procédé d'organisation et de consultation selon l'invention), la démarche intellectuelle de l'utilisateur n'est pas la même, et par conséquent l'interface proposée par le procédé d'organisation et de consultation selon l'invention n'est pas la même.

L'utilisateur veut savoir où le sujet est abordé dans sa bibliothèque. Il souhaite trouver l'emplacement de certains mots-clés, par exemple dans quels livres et à quelles pages on parle du sujet concerné. On est dans une logique d'index, dont l'interface est différente selon que l'on s'intéresse à une page, à un livre, une sélection de livres ou à toute la bibliothèque (à chacun de ces niveaux l'utilisateur peut néanmoins passer facilement au niveau supérieur - par exemple en retapant CTRL-F si l'on choisissait cet accélérateur classique de l'environnement bureautique). A chaque niveau, un indicateur permet de savoir où en est la recherche proportionnellement à l'étendue du domaine scruté. Il permet également de savoir que la recherche est en cours (clignotement, sablier, etc.).

Quand on clique sur cet outil de la barre d'outils, une zone de recherche vient s'insérer en haut de la page active (c'est une bande horizontale ayant la même largeur que la page). Elle comporte un champ permettant de saisir le mot cherché, et les icônes classiques de recherche d'occurrences (premier, dernier, suivant, précédent, fin de la recherche). Les occurrences successivement pointées sont surlignées.

Tous les livres du procédé d'organisation et de consultation selon l'invention comportent un onglet Index, qui constitue le dernier chapitre. Dans un vrai livre papier, tous les mots indexés choisis a priori par l'auteur sont imprimés, et le lecteur choisit dans ces mots celui qui l'intéresse. Cette approche réductrice est due aux limites du papier, mais en fait l'utilisateur sait quel mot il cherche lorsqu'il consulte l'index d'un ouvrage. Les index des livres du procédé d'organisation et de consultation selon l'invention offrent une approche plus conforme à la démarche du lecteur : une zone de saisie permet d'indiquer le mot recherché, et le procédé d'organisation et de consultation selon l'invention affiche automatiquement, en dessous de cette zone, une liste de liens hypertextes pointant sur les pages du livre ouvert comportant le mot. L'utilisateur dispose d'options lui permettant d'indiquer si la recherche doit s'effectuer sur le contenu du document et/ou sur les annotations. Il est également envisagé qu'un certain nombre de termes soient pré-indexés pour recréer un index classique.

Pour afficher ses résultats, cette page d'index peut prendre l'aspect, suivant les préférences ou suite à une action de l'utilisateur, d'un intercalaire qui se superpose sur la page de droite du livre (intercalaire volant), en léger décalage (la page de droite apparaît partiellement). Lorsque l'on clique sur l'un des liens hypertextes résultant de la recherche, le livre s'ouvre à la page concernée (en position page gauche) sous l'intercalaire index.

Le thesaurus est un index global couvrant tous les livres, c'est le dernier onglet du livre Catalogue situé sur l'étagère administrative. Lorsque l'on clique sur cet onglet, on a sur la page de droite une zone de saisie permettant d'indiquer le mot recherché. Les résultats apparaissent sur la même page sous forme d'une arborescence rayonnages / livres / pages dans lesquels apparaît le mot-clé. Le thesaurus utilise le même comportement que l'index pour accéder aux documents trouvés, et utilise la même propriété que l'index des livres pour devenir "volant".

Par ailleurs, l'utilisateur aura la possibilité de sélectionner un sous-ensemble de livres appartenant à sa bibliothèque afin d'affiner sa recherche.

L'utilisateur recherche des documents traitant d'un sujet donné, pour pouvoir les intégrer dans l'un de ses livres. Il s'intéresse aux documents eux-mêmes, pas au contexte dans lequel ils se trouvent. On est dans une logique de recherche de documents, et non pas d'emplacements de documents. Pendant les phases de recherche, un élément de l'interface indique visuellement à l'utilisateur que la recherche est en cours.

Dans le World Wide Web, la fonction de recherche est assurée par le moteur de recherche choisi par l'utilisateur, accessible depuis la première page du chapitre Web du livre de navigation. Il est à noter que grâce à la technologie des PageLets, il sera possible de développer des outils adaptés à certains moteurs de recherche spécifiques pour par exemple supprimer les doublons d'une recherche ou modifier l'affichage des résultats.

Dans les fichiers accessibles depuis le poste de travail, on met en oeuvre un moteur de recherche locale. Sur le Web, le haut de la page des moteurs de recherche est constitué par la zone de saisie des mots-clés, et le bas comporte souvent un classement thématique et hiérarchique des sites proposé par le fournisseur du service.

Pour les fichiers, on reprend la même logique sur la première page du chapitre Fichiers du livre de navigation : en haut la zone de saisie des mots-clés (moteur de recherche locale), en bas le classement hiérarchique déjà décrit (l'explorateur du système de fichiers). Si l'on saisit un mot-clé et que l'on lance la recherche, la page de droite affiche la liste des fichiers accessibles depuis le poste de travail et comportant ce mot-clé. Il est possible de préciser si la recherche doit s'effectuer sur le nom des fichiers et/ou sur leur contenu.

Dans les autres sources de documents, on met en oeuvre un moteur de recherche adapté. Chaque source de document (mail, news, GED, etc.) est associée à un outil de recherche accessible depuis l'intercalaire correspondant du livre de navigation.

On va maintenant décrire la création d'un livre dans le cadre du logiciel implémentant le procédé d'organisation et de consultation selon l'invention. Pour la création d'un livre vierge, la palette d'outils comporte une icône Nouveau Livre. Lorsque l'on clique directement sur cette icône, on appelle un assistant permettant de préciser les propriétés du livre et de choisir sa représentation visuelle. Le nouveau livre ainsi créé est vide, et devient le livre ouvert sur le bureau. Comme tous les livres, il possède un sommaire et un index.

A tout moment, il est possible de créer automatiquement un livre à partir d'un document ouvert ou du résultat d'une recherche, en faisant glisser l'un des éléments suivants sur l'outil Nouveau Livre.

La page Index d'un livre ouvert (ou le thesaurus du catalogue) contenant des liens hypertextes sur toutes les occurrences d'un mot-clé dans ce livre (ou dans la bibliothèque pour le thesaurus). Dans ce cas, le livre créé comporte tous les documents ainsi référencés, sans aucune profondeur. Un assistant propose à l'utilisateur de copier ou non les annotations existantes dans son nouveau livre.

N'importe quelle page du livre de navigation (que l'on soit dans le chapitre Web ou dans le chapitre Fichiers). Dans ce cas, l'assistant de création du livre comporte une étape supplémentaire pour indiquer le niveau de profondeur souhaité pour la récupération de la hiérarchie de documents.

Il est également possible de créer un livre en important les bookmarks du navigateur Web courant du poste de travail (les informations de push gérées par le browser sont également importées). Cette fonction sera automatiquement proposée par la procédure d'installation.

L'utilisateur peut en outre importer des dossiers présents sur son système d'exploitation qui lui permettront de générer un nouveau livre ou bien de créer un nouveau chapitre dans un livre existant. Cette fonction peut par exemple être effectuée à partir d'une opération de glisser déposer.

Toute information générée par le système (Livre, Annotation...) est authentifiée par l'identifiant unique de son auteur ou de la personne qui a modifié cette information. Lorsque la personne génère un livre, l'ensemble des informations concernant l'utilisateur (donc l'auteur) vont être insérées dans l'ouvrage. Ces informations ne pourront être modifiées que par l'auteur.

Dans ce cadre, l'auteur pourra décider de limiter l'accès aux informations par un mécanisme de cryptage, utilisant un mot de passe ou des droits d'accès dans le cadre d'une architecture en groupes de travail.

Ainsi, pour chaque utilisateur est généré un profil (sorte de passeport) permettant son identification. Ce profil peut être assorti d'un mot de passe.

Grâce à son profil, chaque utilisateur conserve son environnement de travail, même s'il n'accède pas à ses données depuis son environnement habituel.

Toutes les actions effectuées par l'utilisateur sont enregistrées dans un journal. Ce journal peut permettre à l'utilisateur de retrouver un document ou la date et le détail d'une opération. Les informations stockées dans ce journal pourront également être utilisées pour effectuer différentes analyses : efficacité du mode de rangement et de classement mis en place par l'utilisateur, efficacité de son utilisation du logiciel, détection et analyse de certains comportements ou de certaines anomalies (redondances, etc..). Ces fonctionnalités pourront être fournies par des composants tiers, par exemple des PageLets.

On va maintenant décrire les différents livres administratifs mis en oeuvre dans le logiciel implémentant le procédé d'organisation et de consultation selon l'invention.

Le livre de navigation comporte un chapitre par source de documents (Web, Fichiers, bases documentaires, courrier électronique, etc.). Quelle que soit sa source, tout document extérieur à la bibliothèque peut donc y être inséré via le livre de navigation. Comme tous les livres, il comporte également un index permettant de rechercher les occurrences d'un mot-clé dans les pages qu'il contient. Le livre de navigation est annotable.
Dans un premier mode de réalisation, le catalogue du logiciel implémentant le procédé d'organisation et de consultation selon l'invention comporte trois chapitres : la liste des abonnements en cours (push), le catalogue des mots-clés utilisés, le thesaurus et, les Pagelets téléchargées ou installées sur le poste.

La liste des abonnements en cours décrit toutes les réactualisations automatiques programmées dans la bibliothèque, avec à chaque fois les pages concernées, les livres auxquels elles appartiennent et la fréquence de réactualisation. L'utilisateur a la possibilité de supprimer ou de modifier ces différents abonnements.
Le catalogue des mots-clés rassemble tous les mots-clés différents apparaissant au moins une fois dans l'un des champs de qualification par mots-clés ou l'une des notes à mots-clés des pages de la bibliothèque. Ces mots-clés sont triés alphabétiquement. L'utilisateur peut s'il le souhaite supprimer un mot-clé de ce catalogue.

Le thesaurus est le dernier chapitre du catalogue : il remplace l'index que l'on trouve habituellement dans les livres. Ce livre peut aussi accueillir un chapitre pour le catalogue des gommettes.

Le livre des préférences rassemble tous les paramètres de configuration et de personnalisation du logiciel implémentant le procédé d'organisation et de consultation selon l'invention. Le principe de fonctionnement retenu pour le paramétrage des préférences est le suivant : lors de l'installation, seules les paramètres indispensables au bon fonctionnement du logiciel implémentant le procédé d'organisation et de consultation selon l'invention seront précisés. Les préférences de « confort » déterminant les comportements par défaut du logiciel ne sont demandées à l'utilisateur que lorsqu'elles sont rencontrées et utilisées pour la première fois.

Le livre d'aide permet de consulter l'aide du logiciel implémentant le procédé d'organisation et de consultation selon l'invention dans la métaphore du livre. Il utilise le format HTML et des liens hypertextes permettant de naviguer facilement d'une rubrique à l'autre. Comme dans tous les livres, un index permet de rechercher rapidement un mot-clé donné.

Le courrier électronique peut être intégré dans le logiciel implémentant le procédé d'organisation et de consultation selon l'invention au moins de deux façons : soit comme une source externe de documents, dans ce cas il est géré par l'intercalaire Courrier du livre de navigation et l'utilisateur conserve son logiciel habituel de gestion de courriers électroniques ; soit on utilise toute la puissance de la métaphore du livre en intégrant étroitement le courrier électronique au sein du logiciel implémentant le procédé d'organisation et de consultation selon l'invention.

Cette intégration plus étroite prend alors la forme d'un cinquième livre administratif, le livre du courrier. Ce livre offre toutes les fonctionnalités d'un logiciel de courrier électronique, avec les valeurs ajoutées suivantes:
- Convivialité et simplicité de la métaphore pour organiser et classer les courriers, pour les rechercher en utilisant l'index, etc... Les courriers reçus et leurs attachements prennent la forme de sous-chapitres du chapitre des courriers reçus. Si l'utilisateur souhaite transformer en livre un courrier reçu et ses attachements, il lui suffit de déposer ce sous-chapitre sur l'outil nouveau livre;
- Possibilité d'annoter les courriers reçus : les courriers reçus ne sont pas modifiables dans un logiciel classique de courrier électronique, pour préserver l'intégrité du message tel qu'il a été formulé par l'émetteur. La possibilité d'annoter un courrier reçu pour le commenter sans pour autant altérer son intégrité constitue une forte valeur ajoutée;
- Rangement des courriers électroniques dans d'autres livres : comme c'est le cas pour toutes les pages des livres mis en oeuvre dans le logiciel implémentant le procédé d'organisation et de consultation selon l'invention, l'utilisateur peut ranger un courrier électronique dans un autre livre, avec des documents provenant d'autres sources mais traitant du même sujet.

Le procédé d'organisation et de consultation selon l'invention peut avantageusement inclure un mode de classement basé sur le chiffre 7.

La méthode d'organisation préférée est basée sur le chiffre 7. Ce chiffre est reconnu comme étant le nombre maximum d'éléments qu'une personne peut percevoir et appréhender simultanément. De façon parfaite, chaque noeud d'une arborescence doit contenir au maximum 7 éléments. Cependant, il est possible d'effectuer une exception à cette règle dans le cas d'une arborescence de fichiers. En effet chaque noeud peut contenir 2 types d'éléments distincts : des sous-noeuds et des feuilles. Un noeud peut donc contenir, sans trop perturber la perception, 7 sous-noeuds et 7 feuilles. De même, la profondeur de l'arborescence doit être au maximum de 7. La racine est de profondeur 0.

La hiérarchie se décompose de la façon suivante :
Rayonnage
Etagère
Livre
Chapitre
Document/Page

La profondeur est de 5 et a la particularité d'être fixe, ce qui lui confère une grande supériorité sur une arborescence classique. Tout document / feuille se situe à partir de la profondeur 5. On peut aussi comparer cela à la positon d'un document sur le Web, il peut être en profondeur 1 comme sur une profondeur infinie.

On dispose ainsi de 7 rayonnages pouvant contenir chacun 7 étagères : soit 49 étagères.
Chacune des 49 étagères peut contenir :
Cas 1 : 7 livres, soit 343 livres, ou
Cas 2 : 14 livres, soit 686 livres
Cas 1 : Chacun des 343 livres peut contenir 7 chapitres : soit 2401 chapitres, ou
Cas 2 : Chacun des 686 livres peut contenir 7 chapitres : soit 4802 chapitres
Ceci illustre bien que le nombre d'unités de rangement est amplement suffisant pour une utilisation classique.
Ceci illustre bien que le nombre d'unités de rangement est amplement suffisant pour une utilisation classique.
Pour un système de fichiers, la hiérarchie se décompose de la façon suivante :
Dossier/Document
Sous Dossier/Document
Etc.

A n'importe quel niveau un document peut être rangé, complexifiant ainsi le processus de recherche.

On va maintenant décrire plusieurs modes d'affichage. Afin de permettre l'exploitation de ces éléments, 6 modes d'affichage ont été conçus. Ces 6 modes permettent de visualiser l'information à différents niveaux permettant d'améliorer la productivité, suivant le type de traitement que l'utilisateur souhaite effectuer. Il est important de préciser que ces différents modes se "suivent" et correspondent à des zooms plus ou moins proches de l'information. Ce nombre de modes n'est pas restrictif, et de nouveaux modes pourraient être ajoutés afin de compléter la vision de l'utilisateur sur l'information. Ces différents modes peuvent cohabiter avec une ou plusieurs fenêtres visibles simultanément à l'écran ou s'exclurent mutuellement (un mode à la fois en plein écran).

Le mode bibliothèque, illustré par la figure 3, permet une visualisation macroscopique de l'information. Elle permet de visualiser la bibliothèque dans son intégralité. Les 7 rayonnages, les 7 étagères par rayonnage et les livres posés sur ces rayonnages sont visibles.

L'objectif de ce mode est de :
- Réorganiser les livres entre les différents rayonnages,
- Choisir le rayonnage de travail (pour le mode Lutrin en particulier),
- Accéder à un livre non présent dans le rayonnage de travail.

On peut également :
Renommer une étagère ou un rayonnage
Exporter et importer un livre
Imprimer un livre
Changer de mode
Supprimer un livre

Il est possible de concevoir une médiathèque, élément se situant à un niveau supérieur d'organisation et permettant à une communauté d'utilisateurs (dans une entreprise en particulier) de partager grâce à un système d'authentification et de cryptage l'ensemble des bibliothèques personnelles ou partagées de l'entreprise. Ce niveau pouvant être lui-même encapsulé par une entité plus large etc.

Chaque rayonnage possède une couleur précise qui permet de l'identifier facilement lorsque l'utilisateur travaille en mode lutrin.

Ce mode dispose également de deux étagères particulières: l'étagère système et l'étagère des livres de travail. L'étagère système rassemble le livre des préférences, le catalogue, le livre d'aide, et le livre de navigation (SurfBook). L'étagère des livres de travail regroupe les livres placés explicitement par l'utilisateur à cet endroit. Cela permet d'avoir constamment "sous la main" ses derniers livres de travail. Suivant une autre implémentation, les étagères seront disposées au sein d'une palette d'outils présente dans l'ensemble des modes de visualisation.

Le mode lutrin, illustré par les figures 4 et 5, est l'interface entre le mode bibliothèque et le mode livre. Sa particularité réside dans sa capacité à offrir certaines fonctions du mode bibliothèque et du mode livre. Il permet à la fois de visualiser individuellement chaque rayonnage et de consulter le livre courant sous forme miniature mais néanmoins lisible.

L'utilisateur peut changer le rayonnage actif (en sélectionnant le numéro de rayonnage), il peut renommer chacune des étagères, déplacer des livres au sein du rayonnage courant, supprimer et créer des livres.

Le mini-livre est posé sur un "lutrin" et permet la consultation du livre courant. Chaque document est représenté dans un mode "ajuster à la taille de l'écran" ("fit to screen"), permettant une identification rapide du document. Il permet de feuilleter le livre, de consulter et d'éditer la table des matières... La puissance de ce mini-livre (et ce qui en fait sa singularité) c'est la possibilité de choisir très rapidement son livre de travail, sans avoir à faire des allers et retours entre un mode bibliothèque et un mode livre. Il constitue un parfait équilibre entre une vue macroscopique de l'organisation des données et la consultation directe de l'information. Ce mode dispose également de l'étagère système et de l'étagère des derniers livres consultés (ou de la palette d'outils si cette implémentation est préférée).

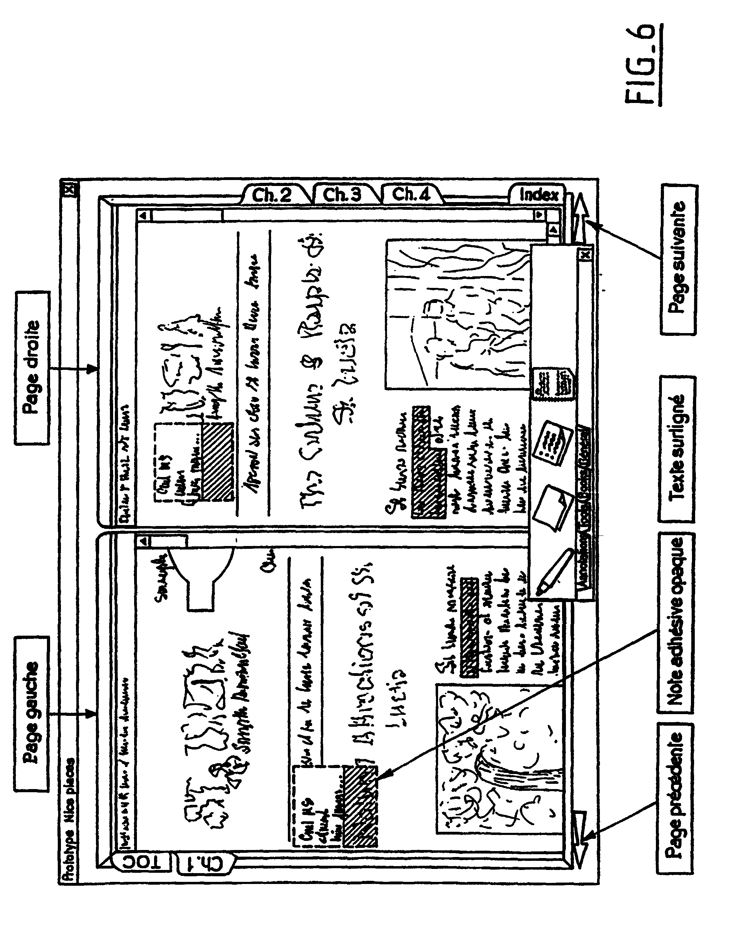

Le mode livre, illustré par la figure 6, est bien plus qu'une transposition du livre dans l'univers électronique. Il permet la consultation, l'édition et la réorganisation de documents au sein d'un liant universel : le livre. Tous les types de documents peuvent être incorporés dans le livre : des requêtes à des bases de données, des documents de bureautique locaux ou distants, des documents Internet. Ce mode livre n'est pas qu'une simple juxtaposition de deux pages, il dispose de nombreux éléments innovants :
La reliure : elle offre de multiples fonctionnalités innovantes. Son aspect visuel dénote l'état du livre : modifiable ou non. On peut, à titre d'exemple, imaginer une reliure avec des anneaux exprimant que le livre est modifiable et une reliure fine et cousue exprimant un livre non modifiable. La reliure permet également d'accéder instantanément à une page quelconque par l'intermédiaire d'un curseur : fonction similaire à une barre de défilement mais étendue au concept de feuilletage à travers des documents indépendants. Par ailleurs, l'utilisateur a la possibilité d'activer un outil d'aperçu rapide au moment du défilement : lorsque l'utilisateur déplace le curseur en maintenant appuyé le bouton de la souris, un mini-livre apparaît, affichant les 2 pages se trouvant au niveau du curseur. Par le simple déplacement latéral de la reliure, il est également possible de modifier l'apparence du livre en agrandissant une des deux pages au dépens de l'autre.
L'ensemble de la reliure représente 100% des pages. Le haut de la reliure référence la deuxième de couverture, le bas, l'index.

Deux actions modifiant la position de lecture dans le livre sont possibles : changer de page et feuilleter le livre.
Changer de page : le lecteur laisse courir le pointeur de la souris le long de la reliure. Une info-bulle l'informe du numéro et du titre des pages. Lorsqu'il a choisi la page qu'il souhaitait consulter, un clic de la souris sur la reliure provoque le changement de page.
Feuilleter le livre : le lecteur déplace le curseur de position, se trouvant sur la reliure, à l'aide de sa souris. Au fur et à mesure qu'il déplace le curseur, une info-bulle apparaît lui indiquant le numéro et le titre de la page (ou bien l'outil d'aperçu rapide précédemment décrit), les pages du livre se tournent pour refléter la position du curseur. Pendant tout le déplacement du curseur, un curseur pastel indique la position d'origine. Lorsque l'utilisateur relâche le curseur, le curseur pastel disparaît.

Si le saut effectué dépasse deux pages, le marque-page est placé à l'endroit d'où l'on est parti.
Les onglets sont affectés à des groupes de pages : les chapitres. Pour chaque chapitre de niveau 1, un onglet est associé. Les onglets permettent d'accéder à des intercalaires délimitant chacun des chapitres de niveau 1 du livre. La position des onglets est celle des intercalaires dans un classeur. Sur chaque intercalaire est affiché le sommaire du chapitre. Ce sommaire est entièrement dynamique : il peut être déployé / condensé ou édité.
Les signets: ce sont l'équivalent des notes adhésives placées au sommet d'une page, dans l'univers du livre. Elles permettent d'identifier une page visuellement et par la description que l'utilisateur a pu insérer. L'utilisateur peut également choisir la couleur du signet.
Les onglets de chargement: lorsqu'un document est en cours de chargement, un onglet est associé au document et reflète le niveau d'avancement du chargement. Cet onglet est plus étroit que les onglets des intercalaires. Cet onglet comporte un bouton d'arrêt qui donne à l'utilisateur la possibilité de stopper le chargement de la page. Dans ce cas, l'onglet de chargement disparaît. Si l'utilisateur laisse la souris au-dessus, une info-bulle apparaît alors et indique le titre de la page ainsi que le débit de la connexion. A la fin du chargement, l'onglet temporaire disparaît.

La zone de Titre/URL : cette zone a la particularité d'être à la fois une zone de saisie du chemin du document (URL pour un document Internet/Intranet) et une zone d'affichage du titre. Lorsque le document ne possède pas de titre, c'est son adresse qui est affichée dans cette zone. L'utilisateur peut choisir l'affichage du titre ou de l'adresse. Dès que l'utilisateur "rentre" dans cette zone, elle passe en mode d'édition.

Le fonctionnement du livre a été optimisé afin de permettre une meilleure consultation des documents, notamment sur Internet. Il est connu que l'esprit, pour travailler, a besoin de repères spatio-temporels : lorsque l'utilisateur tourne la page de droite ou clique sur un lien hypertexte dans la page de droite, le logiciel implémentant le procédé d'organisation et de consultation selon l'invention décale la page de droite vers la gauche et affiche sur la page de droite la nouvelle page. Ceci permet, notamment dans le cadre d'une utilisation sur Internet, de continuer de consulter la page précédente pendant que la nouvelle page se charge.

L'utilisateur peut à tout moment décider de rendre un intercalaire "volant". A titre d'exemple, on peut citer le cas du sommaire ou de l'index. Une fois qu'un intercalaire est volant, il occupe un des deux côtés du livre et reste visible durant tout le travail de l'utilisateur.

Des flèches de navigation permettant de passer à la page suivante ou à la page précédente du livre.

Le mode calepin est une extension du mode livre. La différence entre le mode livre et le mode calepin intervient uniquement dans la position de la reliure. Dans le cas du mode calepin, la reliure est placée horizontalement permettant entre autre une meilleure lisibilité de l'information sur des écrans disposant de résolutions peu importantes.

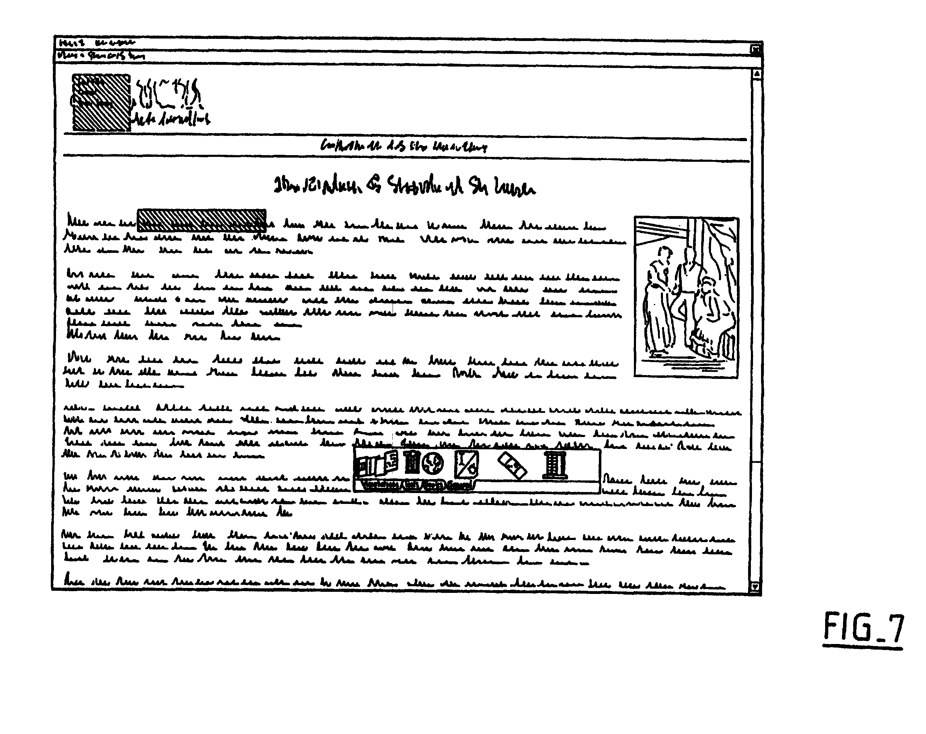

Le mode page, illustré par la figure 7, est le plus exclusif des modes de visualisation. Il permet de consulter et/ou d'éditer un seul document et d'en effectuer un rendu optimum. Tous les éléments graphiques et les outils disparaissent au profit du document. Seule une barre de page située en haut du document rappelle le contexte du logiciel implémentant le procédé d'organisation et de consultation selon l'invention. Les principaux outils peuvent être appelés sous la forme d'un menu volant ou d'une palette d'outils dont l'affichage se commande depuis la barre de page (et par un raccourci clavier).

Le mode trieuse est un mode « éclaté » dans lequel chaque page est représentée par une petite image appelée vignette. Il est possible d'afficher simultanément à l'écran de nombreuses vignettes, et de réorganiser le contenu du livre par simple déplacement de ces vignettes. On peut aussi supprimer une page en supprimant une vignette. Un code de couleurs de fond peut être utilisé pour représenter les chapitres de niveau 1, pour les autres niveaux, la numérotation des vignettes indique leur positionnement dans la hiérarchie du livre. Le titre de la page s'affiche dans une infobulle lorsque la souris passe au-dessus de la vignette correspondante.

Afin de permettre à l'utilisateur de naviguer de façon efficace dans les différents modes de consultation, un outil innovant a été mis au point : l'icône multi-modes. Cette icône permet de passer instantanément dans l'un des modes tout en sachant dans quel mode l'utilisateur se trouve. Suivant l'endroit où l'utilisateur place son pointeur sur l'icône, celle-ci change d'aspect pour mettre en relief le mode pressenti.

Une fois que l'utilisateur a choisi le mode, il lui suffit de cliquer pour valider son choix. S'il y a N modes, l'icône peut donc avoir N*N aspects (Combinaison du mode choisi et du mode en cours). Une version limitée de cette icône peut se contenter d'identifier le mode choisi sans le mode en cours : N aspects (il y a toujours un mode choisi).

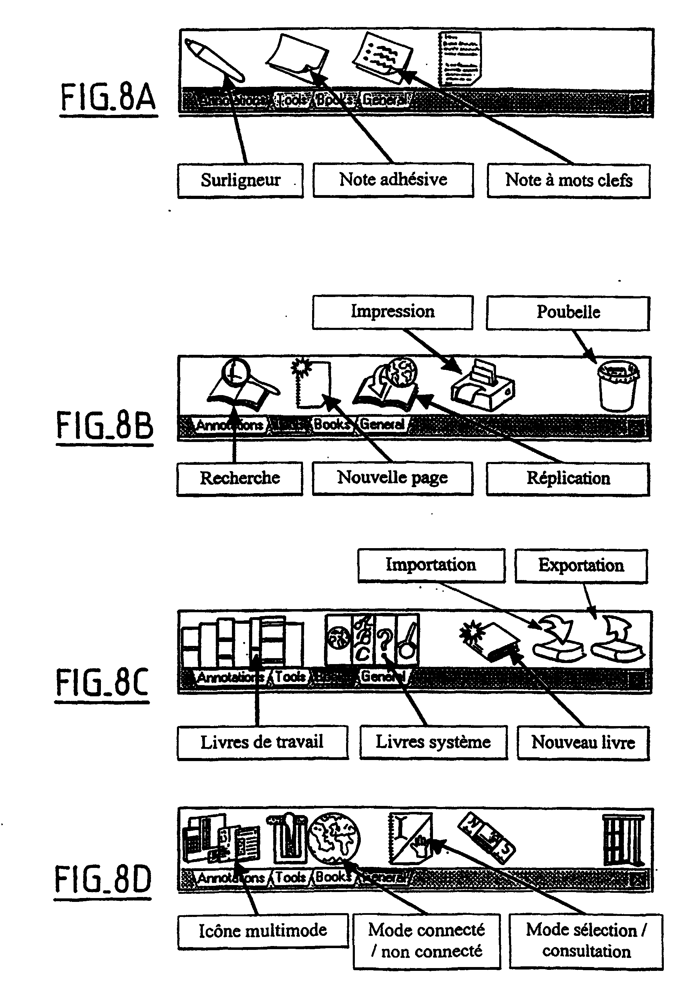

La palette d'outils, illustrée par les figures 8A à 8D, est visible dans l'ensemble des modes de visualisation. Cette palette d'outils est composée de plusieurs languettes regroupant les grandes fonctions par thèmes : annotations, livres, modes, outils.
annotations : surligneur, note adhésive, note à mots clefs,
livres : livres de travail (selon le choix de l'utilisateur), livres systèmes, création d'un livre, importation d'un livre, exportation d'un livre,
modes : icône multi-modes, mode connecté / non connecté, mode sélection / consultation, sortie du produit,
outils : recherche, nouvelle page, réplication de données distantes, impression, poubelle.
Sur la base de la palette, sont également présents (quel que soit l'onglet sélectionné) :
- un commutateur connecté / non connecté,
- un accélérateur de choix et d'indication du consultation

La méthode de consultation de documents électroniques la plus utilisée passe par leur impression. Afin d'améliorer la consultation des livres électroniques, le format d'impression utilisé est le plus fidèle possible au livre. En utilisant de simples feuilles au format standard A4 ou US letter, l'utilisateur dispose d'un véritable livre. Lors de l'impression, l'ensemble des constituants d'un livre sont imprimés : première et deuxième de couverture, table des matières, documents, index...

Le procédé d'organisation et de consultation selon l'invention peut aussi avantageusement inclure des fonctions de reconnaissance et lecture vocale.

Le système de consultation, tel qu'il est décrit, permet l'ajout de composants de reconnaissance vocale permettant d'accélérer la consultation et d'améliorer l'usage du logiciel. Ainsi, l'ensemble des fonctions seront accessibles par reconnaissance de commandes vocales : "Page suivante", "Chapitre suivant", "Nouveau livre"... Il sera également possible d'ajouter des éléments de lecture de documents (pouvant être couplés aux commandes vocales) : "Lire le document", "Lire les annotations"...

Ces possibilités peuvent également être utilisées pour des personnes malvoyantes ou présentant un handicap moteur.

L'environnement peut "à la volée" changer de langue : l'ensemble des menus, textes, icônes, peuvent être dynamiquement modifiés par l'utilisateur en changeant le pays dans l'ouvrage des préférences. Ceci comprend également des particularismes régionaux comme le sens de lecture. On peut par exemple citer le cas de l'arabe où la lecture d'un livre est inversée (par rapport aux langues européennes). Ainsi les positions du sommaire et de l'index seront interchangées. De nombreuses modifications quant à l'aspect du logiciel et des méthodes d'accès aux données sont appliquées.

On va maintenant décrire un autre aspect de la présente invention, visant le flux et le stockage de données électroniques. Il s'agit de décrire les différents états des informations, les processus pouvant affecter leur état et leurs méthodes d'accès. On rappelle que l'information peut être représentée sous n'importe quelle forme de documents électroniques provenant de toute source : HTML (HTTP...), bureautiques (système de fichiers), bases de données (bases relationnelles, objets ou bases documentaires), courriers électroniques (SMTP, POP...), Newsgroup (NNTP...).

Le procédé d'organisation et de consultation selon l'invention peut fonctionner en mode connecté ou en mode déconnecté.

En mode connecté, le logiciel autorise la navigation en ligne sur Internet. Si l'on clique sur un lien ou si l'on navigue avec le Livre de Navigation, le logiciel implémentant le procédé d'organisation et de consultation selon l'invention peut établir une connexion Internet.

En mode déconnecté, le logiciel n'autorise pas la navigation en ligne sur Internet. Si l'utilisateur clique sur un lien pointant vers Internet, un signal sonore lui rappelle qu'il se trouve en mode déconnecté, et l'icône représentative de ce mode clignote une ou deux fois.
Ces deux modes de fonctionnement sont toujours possibles, même si l'utilisateur dispose d'une connexion permanente. En effet, ces deux modes possèdent deux dimensions : économique (la connexion peut être payante), et fonctionnelle (je suis ou pas en phase de recherche et de navigation libre). En consultation d'un livre, un clic accidentel sur un lien hypertexte ne doit pas entraîner une navigation sur Internet, sauf si l'utilisateur s'y déclare prêt en choisissant le mode connecté.

On va maintenant décrire les fonctions de stockage, de péremption et de réactualisation des documents.
Le comportement du procédé d'organisation et de consultation selon l'invention dépend du protocole utilisé pour accéder au document.

Les documents accédés via HTTP sont réputés éphémères, ils peuvent être composés à la volée par le serveur HTTP consulté, en fonction de la navigation effectuée par l'utilisateur. Tous les documents ainsi collectés et conservés dans ses livres par l'utilisateur sont donc stockés par le logiciel implémentant le procédé d'organisation et de consultation selon l'invention dans sa base interne.

S'agissant de pages temporaires dans le chapitre Web du livre de navigation, l'utilisateur a la possibilité d'indiquer que les pages qu'il est en train de consulter (et donc d'ajouter au livre de navigation) ne sont pas à conserver. Elles sont automatiquement supprimées à la fermeture du livre de navigation.

En ce qui concerne les documents accédés via le système de fichiers, les fichiers stockés dans les unités de stockage locales du poste de travail ne sont pas dupliqués, leur chemin d'accès (URL de type file:) est enregistré lorsqu'ils sont référencés dans une page d'un livre mis en oeuvre dans le procédé d'organisation et de consultation selon l'invention.
Pour les unités réseaux, le comportement par défaut est une préférence : les documents sont soit référencés sur l'unité réseau (préférable pour un poste fixe), soit copiés sur l'unité locale (préférable pour un poste mobile). Les documents réseaux copiés sur l'unité locale sont identifiés comme tels, la localisation de l'original est mémorisée par le logiciel implémentant le procédé d'organisation et de consultation selon l'invention. Dans ce cas, le comportement du procédé d'organisation et de consultation selon l'invention est le suivant :
En consultation : lorsque l'unité réseau est accessible, le logiciel implémentant le procédé d'organisation et de consultation selon l'invention vérifie avant d'utiliser sa copie locale du document qu'elle est toujours d'actualité. Si une version plus récente existe, elle est rapatriée. Si l'unité réseau est inaccessible, la copie locale est utilisée.
En modification : seul l'original est modifiable. Si l'utilisateur veut appeler l'application permettant de modifier le document, le logiciel implémentant le procédé d'organisation et de consultation selon l'invention l'appelle sur le document original (réseau), si celui-ci est accessible (sinon, la modification n'est pas autorisée).

Pour des documents accédés via une base documentaire, le logiciel implémentant le procédé d'organisation et de consultation selon l'invention intègre des mécanismes de "versioning". Suivant le mode de travail, deux stratégies sont mises en place.
Consultation : La version la plus récente du document est affichée mais aucune modification n'est possible ("get latest version").
Edition: le logiciel implémentant le procédé d'organisation et de consultation selon l'invention tente d'effectuer un "Check out" du document. Ceci a pour effet de vérifier si le document est déjà en cours d' édition. Si c'est le cas, l'utilisateur ne peut pas éditer le document. Dans le cas contraire, un verrou est posé, le document est rapatrié localement et l'utilisateur dispose d'un accès exclusif en modification. Lorsque l'utilisateur termine l'édition du document la version modifiée est envoyée vers la base documentaire qui met à jour le document et libère le verrou : "Check In".

Lorsqu'un document est numérisé depuis le SurfBook (Intercalaire Numérisation), l'image de ce document est conservée dans le cache mais peut être supprimée suivant les besoins du cache. Une fois que cette image est transférée dans un ouvrage créé par l'utilisateur, l'image du document est conservée définitivement par le système : elle pourra être annotée et éventuellement éditée.

En matière de courrier électronique, l'utilisateur a deux options : soit il conserve son logiciel de courrier électronique, et dans ce cas celui-ci est considéré par le logiciel implémentant le procédé d'organisation et de consultation selon l'invention comme une source externe de documents. Le paragraphe qui suit détaille alors la façon dont cette source est intégrée dans le logiciel implémentant le procédé d'organisation et de consultation selon l'invention. Soit l'utilisateur souhaite profiter pour la gestion de son courrier électronique de toute la puissance de la métaphore du livre, et dans ce cas il peut utiliser le Livre du courrier, l'un des livres administratifs du logiciel implémentant le procédé d'organisation et de consultation selon l'invention décrits plus haut dans ce document.

Si l'utilisateur préfère conserver le logiciel de courrier électronique dont il dispose déjà sur son poste, ses courriers peuvent être consultés depuis l'intercalaire Courrier du livre de navigation. Cet intercalaire présente les différents dossiers dans lesquels sont rangés les courriers de l'utilisateur. Pour accéder à ces informations, le logiciel implémentant le procédé d'organisation et de consultation selon l'invention utilise un protocole standard du type MAPI. Les courriers peuvent être consultés et annotés dans le livre de navigation, chaque courrier consulté est affecté à une page. Cette page peut être copiée dans un autre livre. Les courriers électroniques insérés dans des livres sont copiés et stockés dans la base interne du logiciel implémentant le procédé d'organisation et de consultation selon l'invention.

Comme pour le courrier électronique, si l'utilisateur dispose d'un accès aux newsgroups il peut les consulter depuis l'intercalaire correspondant du livre de navigation. Ces messages étant par nature volatiles, ils sont systématiquement copiés lorsqu'ils sont insérés dans un livre. On peut également envisager la création d'un livre des groupes de discussion (NewsBook).
Le logiciel implémentant le procédé d'organisation et de consultation selon l'invention utilise les informations de péremption fournies par les serveurs Web (directement dans le protocole HTTP ou via un format de type CDF) pour qualifier la « fraîcheur » d'un document. Les documents réputés périmés sont repérés graphiquement (barrés d'une diagonale rouge fluo par exemple). Les livres contenant des documents périmés sont également repérés graphiquement (coin rouge fluo sur la tranche par exemple). A tout moment, l'utilisateur peut demander la réactualisation d'une page périmée, ou d'un livre comportant des pages Web périmées. Il a la possibilité d'indiquer si la nouvelle version doit venir remplacer l'ancienne, ou si elle doit être seulement ajoutée. L'utilisateur peut également indiquer la date à laquelle une information peut être purement et simplement retirée.

L'utilisateur a la possibilité de programmer une réactualisation automatique et régulière de certaines pages. Lorsque des informations de push sont disponibles, elles sont utilisées par le logiciel implémentant le procédé d'organisation et de consultation selon l'invention pour paramétrer cette réactualisation. Sinon, l'utilisateur doit paramétrer lui-même la fréquence de la réactualisation. L'utilisateur peut dans tous les cas indiquer si les nouvelles pages doivent remplacer les anciennes, ou si elles doivent s'y ajouter. Dans le cas d'un remplacement, il indique si les éventuelles annotations doivent être supprimées ou au contraire affectées à la dernière actualisation. L'utilisateur peut programmer la réactualisation en déterminant lui-même la durée de vie de l'information et donc sa fréquence de sa réactualisation : quotidienne, hebdomadaire, mensuelle ou annuelle.

A chaque fois que l'utilisateur passe en mode connecté et que des réactualisations sont nécessaires, le logiciel implémentant le procédé d'organisation et de consultation selon l'invention lance automatiquement ces réactualisations mais permet à l'utilisateur de les stopper (s'il souhaite disposer de toute la bande passante). Une préférence permet d'imposer au logiciel implémentant le procédé d'organisation et de consultation selon l'invention qu'il demande à l'utilisateur l'autorisation de lancer les réactualisations avant leur démarrage effectif. Les pages et les livres réactualisés mais pas encore consultés par l'utilisateur sont repérés par un indicateur vert fluo. Le chapitre « abonnements » du catalogue regroupe toutes les réactualisations automatiques programmées dans la bibliothèque mise en oeuvre dans le procédé d'organisation et de consultation selon l'invention.

Pour un push de publicité, le logiciel implémentant le procédé d'organisation et de consultation selon l'invention peut mettre en oeuvre des bannières publicitaires en différents endroits régulièrement accédés (livres administratifs, pages d'index, thesaurus, etc.). Lorsqu'une connexion Internet est établie, le logiciel implémentant le procédé d'organisation et de consultation selon l'invention pourra recevoir automatiquement de nouvelles bannières.

Il est également possible de "pusher" des livres complets, par exemple des catalogues de vente par correspondance qui sont ainsi mis à jour, ou bien des encyclopédies livrées initialement sur cédérom puis mises à jour par le mécanismes de push.

S'agissant de livres ou dossiers à l'image d'une source de données distante (Internet, base de données...), l'utilisateur peut également programmer la création d'une "image" complète ou partielle d'une source de données distante (site Web par exemple). Il spécifie la source de données et son adresse (ainsi que de nombreuses options comme la profondeur du miroir dans le cadre d'une structure hiérarchique, la taille maximale de l'image créée...) et choisit de créer un nouveau livre ou bien un nouveau dossier dans le livre courant. Ce nouvel élément créé a la particularité de pouvoir être automatiquement mis à jour (Cf. Push) mais en regroupant un ensemble de pages.

L'information, suivant sa provenance : web , mail, système de fichiers, intranet, base documentaire, est identifiée de façon spécifique. Cela permet à l'utilisateur de connaître les données qu'il maîtrise.

Un mécanisme d'accélérateur Web permet le préchargement (dans le cache) de documents distants identifiés par des liens hypertextes et se trouvant dans les pages en cours de consultation par l'utilisateur.

Les livres constitués par un utilisateur sont conservés dans sa bibliothèque, qui contient donc le savoir accumulé par cette personne sous forme électronique. L'un des atouts importants du procédé d'organisation et de consultation selon l'invention est de permettre le partage et la transmission à des tiers de ce savoir dans une forme qui non seulement n'ajoute pas de barrière technologique à cette transmission et à l'utilisation du savoir transmis, mais qui en plus valorise fortement ce contenu en lui conférant l'aspect d'un livre, objet valorisant, familier, respecté et universel.

Ces fonctions de transmission prennent toute leur puissance lorsqu'elles sont couplées aux outils de recherche (par exemple recherche sur des mots-clés). Si l'utilisateur peut envoyer l'un des livres existant dans sa bibliothèque, il peut également constituer dynamiquement un nouveau livre en recherchant dans sa bibliothèque tous les documents contenant un ou plusieurs mots-clés. Ces mots-clés peuvent être recherchés dans les documents eux-mêmes ou dans les annotations ajoutées par l'utilisateur, dans ce cas il peut s'agir par exemple des initiales d'un collaborateur. Le livre ainsi généré contiendra l'ensemble des documents annotés que l'utilisateur aura pressentis comme intéressants pour son collaborateur. Ces fonctions de transmission du savoir sont mises en oeuvre à partir des mécanismes d'export et d'import.

L'utilisateur peut faire glisser sur l'outil Export un ou plusieurs livres. L'assistant Export lui demande s'il souhaite exporter aussi les annotations, s'il souhaite exporter les contenus ou seulement leurs références (URL), s'il souhaite que le livre soit modifiable ou non par l'utilisateur, etc. Lors de l'export des notes à mots clefs, l'utilisateur peut indiquer s'il souhaite les retirer à l'issue de l'opération (notes qui n'ont plus lieu d'être une fois que les documents sont exportés). Il indique également s'il souhaite exporter l'outil de visualisation du logiciel implémentant le procédé d'organisation et de consultation selon l'invention avec le livre, pour pouvoir l'envoyer à un destinataire qui n'aurait pas le logiciel. Il est également possible d'envoyer le livre sous forme non modifiable mais consultable dans un navigateur Web. On a donc trois cas de figure :

Seul le livre est exporté dans un fichier de données compressé, lisible par la fonction Import du logiciel complet associé au procédé d'organisation et de consultation selon l'invention.

Le fichier exporté est un exécutable auto-extractable comportant le visualiseur (viewer) du logiciel implémentant le procédé d'organisation et de consultation selon l'invention et le livre compressé. Le viewer est une application permettant de consulter un livre et ses annotations, sans qu'il soit pour autant possible de le modifier ou de naviguer hors du livre (le viewer permet également de télécharger la version complète du logiciel).

Le livre est transformé en une hiérarchie de pages Web permettant de le consulter depuis un navigateur Web standard. Là aussi un hyperlien permet de télécharger le logiciel complet. Tous les documents sont convertis dans un format reconnaissable par le navigateur (HTML, XML, etc.) tout en conservant leurs annotations.

La dernière étape de l'assistant permet de préciser ce qu'il faut faire du livre exporté. Trois choix sont possibles :
- Stocker le livre dans un fichier, dans ce cas la boîte de dialogue "Enregistrer.Sous" standard du système d'exploitation est utilisée.
- Utiliser le logiciel de courrier électronique du poste de travail pour envoyer directement le livre à un destinataire (en utilisant l'interface programmatique MAPI) .
- Utiliser le livre de courrier du logiciel implémentant le procédé d'organisation et de consultation selon l'invention pour composer un courrier et envoyer le livre.

Lorsque l'on clique sur l'outil Import, l'assistant d'import demande où le livre importé doit être recherché. Deux cas sont possibles.

Pour un fichier local, une boîte de dialogue "Fichier.Ouvrir" standard apparaît. L'utilisateur désigne le fichier associé au procédé d'organisation et de consultation selon l'invention à importer, puis valide.

Pour un courrier électronique reçu par le logiciel de courrier de l'utilisateur, le logiciel implémentant le procédé d'organisation et de consultation selon l'invention utilise une interface de type MAPI pour détecter les courriers identifiés par le logiciel implémentant le procédé d'organisation et de consultation selon l'invention comme comportant des livres.

L'assistant demande ensuite où ranger ce livre dans la bibliothèque, et si ce livre doit être automatiquement ouvert sur le lutrin et devenir le livre actif. Cette procédure reconnaît tous les formats possibles d'export du logiciel implémentant le procédé d'organisation et de consultation selon l'invention (livre natif, livre avec viewer, livre Web).

La plupart des pages d'un livre mis en oeuvre dans le procédé d'organisation et de consultation selon l'invention sont une structure d'accueil d'un contenu externe à l'application, choisi par l'utilisateur comme relevant du contexte du livre. Ce contenu peut être statique (documents bureautiques), navigable (pages Web) ou interactif (contrôles HTML, JavaScript, composants applicatifs Java - applets, etc.).

Même dans le cas des contenus interactifs intégrant un comportement, il n'existe aucune interaction entre ces contenus externes et la structure du livre mis en oeuvre dans le procédé d'organisation et de consultation selon l'invention dans lequel ils sont insérés.

Il existe une autre nature de pages, que l'on pourrait appeler des pages systèmes : ce sont celles qui permettent à l'utilisateur d'intervenir sur la structure du livre, que ce soit pour le consulter (index, sommaire, etc.) ou le modifier (réorganisation du sommaire par exemple) .

Une PageLet (contraction de page-applet) est une page d'un livre mis en oeuvre dans le procédé d'organisation et de consultation selon l'invention ayant accès à la structure de ce livre. La définition d'une technologie générique pour l'architecture technique des PageLets a deux avantages :
- elle structure le développement de toutes les PageLets intégrées en standard dans le produit ;
- elle définit un standard permettant à des tiers de développer et de commercialiser des PageLets.

Pour atteindre ces objectifs, les PageLets doivent être des composants logiciels réutilisables, présentant et utilisant des interfaces normalisées indépendantes des langages. Les PageLets peuvent également être scriptables, c'est-à-dire que les fonctionnalités qu'elles offrent peuvent être indifféremment exécutées de façon interactive par l'utilisateur ou de façon automatique par un environnement de scripting.

Les interfaces fournies par le logiciel implémentant le procédé d'organisation et de consultation selon l'invention à une PageLet lui permettent d'obtenir une référence sur le livre dans lequel elle est insérée. Une fois que la PageLet dispose d'une référence sur le livre dans lequel elle se trouve, elle peut l'utiliser pour mettre en oeuvre les différentes interfaces fournies dans le kit de développement de PageLets. Ces interfaces permettent notamment d'aller à une page donnée, d'insérer des pages dans le livre, de.savoir dans quel chapitre on se trouve, de réorganiser le livre, d'accéder au contenu des autres pages du livre, etc. Des interfaces sont également fournies aux PageLets pour leur permettre de s'abonner à certains événements déclenchés par BooXeven lors de la modification du contenu de sa base de données. Les PageLets pourront de cette façon réagir directement aux modifications effectuées dans la bibliothèque ou dans le livre dans lequel elles sont insérées.

Les PageLets doivent par ailleurs pouvoir s'identifier au sein de l'environnement spécifique au procédé d'organisation et de consultation selon l'invention, pour que celui-ci puisse présenter à l'utilisateur les principales caractéristiques de la PageLet. Cette identification peut aussi être associée à un niveau de certification de la PageLet, lui autorisant ou non un accès en lecture ou en écriture sur le livre en cours, ou même sur les autres livres de la bibliothèque de l'utilisateur.

En utilisant le logiciel implémentant le procédé d'organisation et de consultation selon l'invention, l'utilisateur pourra par exemple accéder à un site Web proposant un catalogue de PageLets téléchargeables. Le standard PageLet comportera par exemple la définition d'un tag HTML spécifique permettant au logiciel implémentant le procédé d'organisation et de consultation selon l'invention de détecter que la ressource référencée par la page Web consultée est une PageLet. Si l'utilisateur décide de télécharger la PageLet, le logiciel implémentant le procédé d'organisation et de consultation selon l'invention la rangera automatiquement dans le chapitre « PageLets » du catalogue. Ce chapitre comportera une page pour chacune des PageLets ainsi récupérées par l'utilisateur. Cette page présentera un aperçu de la PageLet, sa description, sa version, sa date de création et l'identification de son auteur (le procédé d'organisation et de consultation selon l'invention obtiendra ces informations lorsque la PageLet s'enregistrera dans son environnement). A partir du catalogue, l'utilisateur pourra alors insérer la PageLet dans n'importe lequel de ses livres.

On peut aussi imaginer que certaines PageLets puissent venir remplacer (et non pas compléter) certains fonctionnements standards du logiciel (par exemple l'index).

On donne ci-après quelques exemples d'utilisations possibles de la technologie PageLet par des tiers :
- PageLet « résumé automatique » :
   Des sociétés spécialisées dans la gestion de fonds documentaires disposent de technologies d'analyse linguistique permettant de générer un résumé à partir d'un ou plusieurs documents traitant d'un même sujet. Elles pourront développer une PageLet insérable au début d'un chapitre ou d'un livre et affichant automatiquement le résumé du chapitre ou du livre.
- PageLet « moteur de recherche » :
   Une société disposant d'une technologie spécifique de recherche avancée dans un fonds documentaire ou sur le Web pourra créer une PageLet permettant à l'utilisateur de formaliser sa recherche, le résultat étant produit sous la forme de pages, chapitres et sous-chapitres générés, insérés et organisés par la PageLet.
- PageLet « réorganisation » :
   Après avoir parcouru plusieurs dizaines de sites Internet au cours d'une session de recherche, un utilisateur peut se retrouver avec des centaines de pages dans son livre, toutes « à plat » et difficilement exploitables en l'état. Une société spécialisée dans l'analyse lexicale et thématique de données pourra proposer une PageLet capable de réorganiser complètement le contenu d'un chapitre ou d'un livre en classant ses pages par thèmes et sous-thèmes. Elle pourra également proposer une représentation graphique spécifique du contenu du chapitre.
- PageLet « statistiques » :
   Après une utilisation importante des différentes sources d'informations à sa disposition, l'utilisateur veut connaître comment se découpe son temps de travail suivant les différentes sources, combien de fois il est allé consulter tel document... Cette PageLet pourra être développée grâce aux mécanismes d'abonnement aux différents types d'événements. Elle pourra offrir en temps réel des informations de fréquence d'utilisation, de temps d'utilisation, quantité d'information stockée, niveau de remplissage de la bibliothèque... par exemple au travers de vu-mètres
- PageLet « aide à la décision » :
   A partir des outils de statistique et de journalisation, il est possible d'implémenter des outils d'aide à la décision, à la prévention d'erreurs, à l'étude macroscopique des activités d'un utilisateur. Il sera ainsi possible d'avertir l'utilisateur qu'il a déjà envoyé un document à un destinataire, que de nombreux documents sont redondants dans sa bibliothèque, que certains livres n'ont pas été consultés depuis une grande période de temps, que l'utilisateur accède souvent à un document mais ne passe qu'un temps limité sur celui-ci, que ses abonnements (Push) consomment une grande partie de sa bande passante, que certains abonnements ne sont que rarement consultés, qu'étant donnés les éléments qu'il consulte régulièrement il serait intéressant de s'abonner à telle source d'information ou bien d'accéder à tel type de document...

Pour la formalisation des interfaces, deux techniques d'implémentation peuvent être envisagées pour les PageLets : un composant binaire ActiveX spécialisé, ou une page Web comportant des scripts accédant aux interfaces exposées par le logiciel implémentant le procédé d'organisation et de consultation selon l'invention.

Dans le cas d'une implémentation des PageLets sous la forme d'ActiveX , une PageLet ayant la forme d'un ActiveX aura les particularités suivantes :
- elle doit implémenter des interfaces binaires standards définies et normalisées;
- elle utilise une interface programmatique d'accès aux livres.

On va maintenant présenter plusieurs exemples d'interfaces binaires exposées par les PageLets :
- IRegisterPageLet : cette première interface est celle permettant au logiciel associé au procédé d'organisation et de consultation selon l'invention d'accueillir un composant ActiveX en le reconnaissant comme étant une PageLet, afin de pouvoir la ranger dans le catalogue des PageLets et de permettre ainsi à l'utilisateur de s'en servir (en l'insérant dans l'un de ses livres). Cette interface comporte notamment la méthode suivante :
   - GetDescription (utilisée par le procédé d'organisation et de consultation selon l'invention pour obtenir l'auteur, la description textuelle et une représentation graphique de la PageLet, ces informations lui permettant d'insérer cette PageLet dans le chapitre PageLet du catalogue de la bibliothèque).
- IUsePageLet : cette interface est celle utilisée par le logiciel implémentant le procédé d'organisation et de consultation selon l'invention lorsqu'une PageLet est instanciée pour être insérée dans un livre. L'instanciation se fera via la méthode CreateInstance de l'interface standard IClassFactory2 si elle est implémentée par la PageLet, ou sinon par celle de l'interface de base IClassFactory (de cette façon, on permet aux éditeurs de PageLet de contrôler les droits et les licences d'utilisation de leurs PageLets, cette fonctionnalité étant accessible uniquement via IClassFactory2). IUsePageLet comporte notamment la méthode suivante :
   - SetBookContext (utilisée par le procédé d'organisation et de consultation selon l'invention lorsque l'utilisateur insère la PageLet dans un livre, pour fournir à la PageLet une référence sur ce livre et pour lui indiquer son emplacement dans le livre).

Une interface programmatique API (Application Programming Interface) utilisable par les développeurs de PageLets est fournie dans le cadre d'un kit de développement de PageLets. Elle leur permet d'accéder aux différentes méthodes exposées par les objets C++ qui représentent le livre. Cette interface fournit notamment les fonctionnalités suivantes :
- accès à la structure du livre (chapitres, pages, annotations) ;
- accès aux contenus référencés par les pages du livre (accès direct au contenu binaire ou API d'accès au texte) ;
- accès aux autres livres de la bibliothèque (selon le niveau de certification de la PageLet).

En ce qui concerne l'implémentation des PageLets sous la forme de pages Web, le procédé d'organisation et de consultation selon l'invention procure une interface d'utilisation facile permettant à d'autres ISV et aux utilisateurs potentiels de réaliser leurs propres PageLets comme de simples documents Web.

Le procédé d'organisation et de consultation selon l'invention expose des interfaces permettant aux PageLets de s'enregistrer dans la bibliothèque courante, d'accéder à la base de données de la bibliothèque et d'utiliser les mécanismes d'automation (script) de BooXeven. La solution que nous avons adoptée pour exposer ces interfaces permettra aux tiers de les utiliser de façon transparente depuis les environnements C++ (aussi bien Visual C++ que les environnements de développement rapide RAD tel que celui de Borland), les L4G supportant VBA (typiquement Visual Basic) et les PageLets écrites en JScript et VBScript.

L'interface utilisée dans le logiciel implémentant le procédé d'organisation et de consultation selon l'invention peut être décrite sous la forme d'une dispinterface duale dans le langage IDL. Les L4G (VB, Borland C++ Builder) utiliseront l'interface IDispatch (en particulier sa méthode Invoke), tandis que les L3G (Visual C++) utiliseront les interfaces standards à base de vtable via leurs proxys C++ générés automatiquement par MIDL.

Le procédé d'organisation et de consultation selon l'invention procure une implémentation de l'interface IDocHostUIHandler au composant WebBrowser2 (aussi appelé IE4/MSHTML) qu'il intégrera, en utilisant l'interface ICustomDoc exposée par ce composant. Cette interface IDocHostUIHandler servira à plusieurs choses, mais en ce qui concerne les appels des PageLets l'implémentation de la méthode IDocHostUIHandler::GetExternal retournera l'interface IDispatch duale décrite précédemment.

Les PageLets pourront alors accéder à ces interfaces en utilisant une syntaxe de script extrêmement simple : window.external[.*méthodes et propriétés BooXeven*].

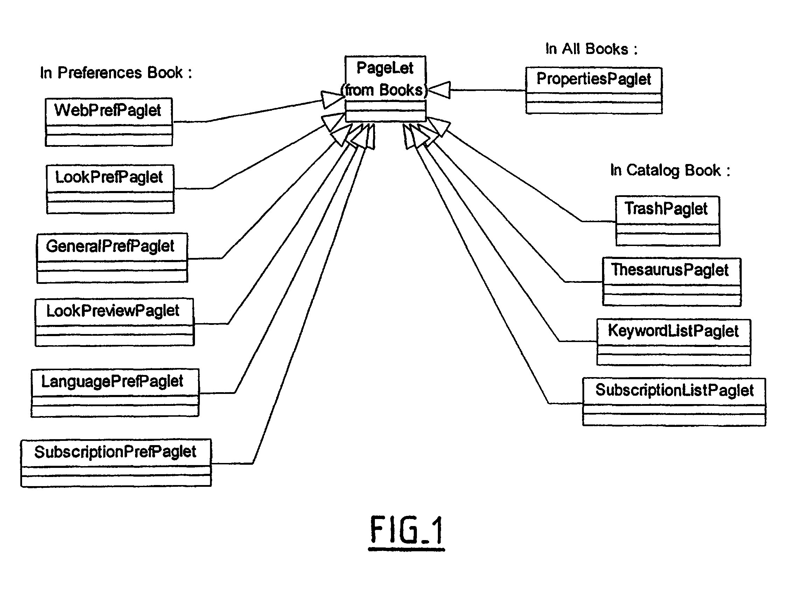

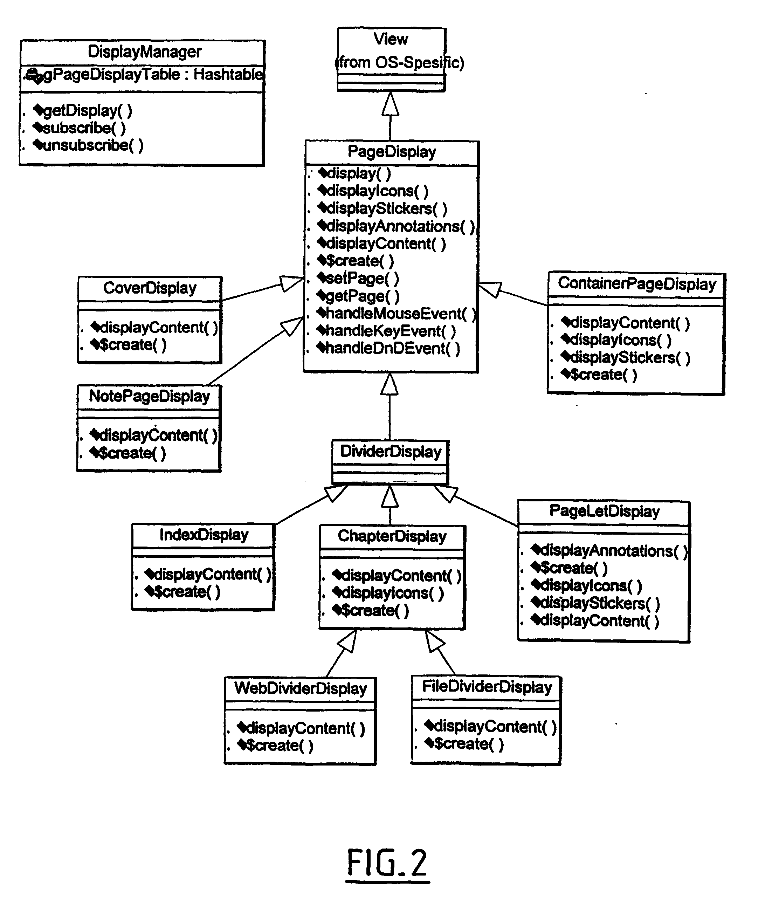

Il est à noter que dans le procédé d'organisation et de consultation selon l'invention, on peut mettre en oeuvre un modèle objet des livres tel que celui représenté en figure 1, et un modèle de visualisation des pages tel que celui représenté en figure 2.

Bien sûr, l'invention n'est pas limitée aux exemples qui viennent d'être décrits et de nombreux aménagements peuvent être apportés à ces exemples sans sortir du cadre de l'invention.

## Revendications

1. Procécé pour organiser et consulter sur un poste de travail des documents électroniques provenant d'une pluralité de sources de données et fournis sous des formats divers, comprenant :
- une visualisation de ces documents électroniques dans une représentation graphique utilisant la métaphore du livre, et
- une génération d'un ensemble de livres électroniques agencés pour référencer et visualiser ces documents sous la forme de pages,
**caractérisé en ce qu'**il comprend en outre des fonctions d'accès à la structure de chaque livre électronique réalisées sous la forme de pages systèmes, distinctes de fonctions d'accès aux contenus référencés par les pages de ce livre électronique.

2. Procédé selon la revendication 1, **caractérisé par** la mise en oeuvre d'un ensemble de livres électroniques d'administration contrôlés par le poste de travail et rangés dans une bibliothèque, ces livres électroniques d'administration comprenant des pages exécutables pour réaliser des opérations de constitution, d'actualisation et de consultation desdits livres électroniques.

3. Procédé selon l'une des revendications 1 ou 2, **caractérisé en ce que** l'ensemble de livres électroniques d'administration comprend un catalogue incluant un catalogue de mots-clés et un thésaurus.

4. Procédé selon la revendication 3, **caractérisé en ce que** le catalogue inclut en outre une liste d'abonnements pour recevoir des documents électroniques en provenance de sources dédiées ("push").

5. Procédé selon l'une des revendications 2 à 4, **caractérisé en ce que** l'ensemble de livres électroniques d'administration comprend en outre un livre électronique des préférences incluant un ensemble de paramètres de configuration et de personnalisation dudit procédé.

6. Procédé selon l'une des revendications 2 à 5, **caractérisé en ce que** l'ensemble des livres électroniques d'administration comprend en outre un livre électronique d'aide.

7. Procédé selon l'une des revendications 2 à 6, **caractérisé en ce que** l'ensemble des livres électroniques d'administration comprend en outre un livre électronique du courrier agencé pour procurer des fonctionnalités d'un logiciel de courrier électronique et pour ranger un courrier électronique dans un des livres électroniques rangés dans la bibliothèque.

8. Procédé selon l'une quelconque des revendications précédentes **caractérisé en ce qu'**il met en oeuvre, au sein d'une bibliothèque, un ou plusieurs livres électroniques de travail correspondant à des livres dans lesquels des opérations d'insertion, de suppression ou de consultation de documents électroniques sont en cours.

9. Procécé selon l'une quelconque des revendications précédentes, **caractérisé en ce qu'**il est agencé pour procurer un mode de visualisation sous la forme d'une médiathèque procurant un accès aux informations provenant de bibliothèques individuelles partagées.

10. Procédé selon l'une quelconque des revendications précédentes, **caractérisé en ce qu'**il est en outre agencé pour procurer un mode de visualisation sous la forme d'un lutrin prévu pour un rangement des données en cours et une prévisualisation de ces données.

11. Procédé selon la revendication 10, **caractérisé en ce qu'**il est en outre agencé pour procurer un mode de visualisation miniature des livres posés sur le lutrin.

12. Procédé selon l'une quelconque des revendications précédentes, **caractérisé en ce qu'**il est en outre agencé pour procurer un mode de visualisation sous la forme d'un calepin prévu pour une consultation et un rangement d'informations relatives à un thème donné.

13. Procédé selon l'une quelconque des revendications précédentes, **caractérisé en ce qu'**il est en outre agencé pour procurer une visualisation sous la forme d'une trieuse prévue pour une réorganisation et une consultation sous forme de vignettes de données relatives à un thème déterminé.

14. Procédé selon l'une quelconque des revendications précédentes, **caractérisé en ce qu'**il comprend en outre une prévisualisation des documents à consulter sous la forme d'un livre.

15. Procédé selon l'une quelconque des revendications précédentes, **caractérisé en ce qu'**il comprend en outre des méthodes d'accès par type de documents incluant une identification par localisation.

16. Procédé selon l'une quelconque des revendications précédentes, **caractérisé en ce qu'**il est agencé pour procurer une identification du mode d'un livre par l'aspect de sa reliure.

17. Procédé selon l'une quelconque des revendications précédentes, **caractérisé en ce qu'**il est agencé pour procurer une lecture double-page basée sur une translation de page.

18. Procédé selon l'une quelconque des revendications précédentes, **caractérisé en ce qu'**il est agencé pour procurer un positionnement automatique d'un marque-page pour revenir à des informations précédemment consultées.

19. Procédé selon l'une quelconque des revendications précédentes, **caractérisé en ce qu'**il comprend en outre une génération d'un livre de documents à partir d'une recherche effectuées au sein d'une médiathèque.

20. Procédé selon l'une quelconque des revendications précédentes, **caractérisé en ce qu'**il est agencé pour procurer une consultation d'un résultat de recherche sous la forme de vignettes.

21. Procédé selon l'une quelconque des revendications précédentes, **caractérisé en ce qu'**il est agencé pour permettre une recherche d'informations segmentées par niveau.

22. Procédé selon l'une quelconque des revendications précédentes, **caractérisé en ce qu'**il comprend en outre une génération incrémentale de livres et de données persistantes à partir de données électroniques provenant de mécanismes de type "Push".

23. Procédé selon l'une quelconque des revendications précédentes, **caractérisé en ce qu'**il est agencé pour procurer une feuille ou un intercalaire volant permettant de conserver une information à l'écran pendant la consultation d'autres informations accédées depuis des liens hypertextes ou par tout autre mécanisme.

24. Procédé selon l'une quelconque des revendications précédentes, **caractérisé en ce qu'**il procure un mode de classement basé sur le chiffre 7.

25. Procédé selon l'une quelconque des revendications précédentes, **caractérisé en ce qu'**il est agencé pour procurer une annotation de courriers électroniques.

26. Procédé selon l'une quelconque des revendications précédentes, **caractérisé en ce qu'**il met en oeuvre un icône multi-mode.

27. Procédé selon l'une quelconque des revendications précédentes, **caractérisé en ce qu'**il est agencé pour procurer une identification de la fraîcheur d'une information consultée et/ou stockée.

28. Procédé selon l'une quelconque des revendications précédentes, **caractérisé en ce qu'**il est agencé pour générer un ou plusieurs icônes de chargement temporaires de données électroniques.

## Claims

1. Method for organizing and consulting on a workstation documents originating from a plurality of sources and supplied in various forms, comprising :
- displaying said electronic documents in a graphic representation using the book metaphor, and
- generating a set of electronic books arranged for referencing and displaying said documents under the form of page, **characterized in that** it further comprises functions for accessing the structure of each electronic book that are achieved under the form of system pages, and that are distinct from functions for accessing contents referenced by the pages of said electronic book.

2. Method according to claim 1, **characterized by** implementing a set of administration electronic books controlled by the workstation and stored in a library, said administration electronic books comprising executable pages for achieving operations for constituting, updating and consulting said electronic books.

3. Method according to claims 1 or 2, **characterized in that** the set of administration electronic books comprises a catalogue including a catalogue of key-words and a thesaurus.

4. Method according to claims 3, **characterized in that** the catalogue further includes a list of abonments for receiving electronic documents from dedicated sources '("push").

5. Method according to any of claims 2 to 4, **characterized in that** the set of administration electronic books further comprises an electronic book of preferences including a set of parameters for configuring and personalizing said method.

6. Method according to any of claims 2 to 5, **characterized in that** the set of administration electronic books further comprises a help electronic book.

7. Method according to any of claims 2 to 6, **characterized in that** the set of administration electronic books further comprises a mail electronic book for providing functionalities of electronic mail and for storing electronic mail in one of the electronic books stored in the library.

8. Method according to any of the preceding claims, **characterized in that** it implements, within a library, one or more work electronic books corresponding to books wherein operations for inserting, suppressing or consulting electronic books are under way.

9. Method according to any of the preceding claims, **characterized in that** it is configured to provide a visual display mode in the form of a media library providing access to the information originating from shared individual libraries.

10. Method according to any one of the preceding claims, **characterized in that** it is configured moreover to provide a visual display mode in the form of a lectern intended for storage of the current data and previewing of these data.

11. Method according to claim 10, **characterized in that** it is configured moreover to provide a mode of miniature visual display of the books placed on the lectern.

12. Method according to any one of the preceding claims, **characterized in that** it is configured moreover to provide a visual display mode in the form of a notebook intended for consultation and storage of information relating to a given topic.

13. Method according to any one of the preceding claims, **characterized in that** it is configured moreover to provide a visual display mode in the form of a sorter intended for reorganization and consultation in the form of data vignettes relating to a defined topic.

14. Method according to any one of the preceding claims, **characterized in that** it moreover comprises previewing of the documents to be consulted in the form of a book.

15. Method according to any one of the preceding claims, **characterized in that** it moreover comprises methods for access by document type including identification by location.

16. Method according to any one of the preceding claims, **characterized in that** it is configured to provide identification of the alterable or non-alterable status of the book via appearance of its binding.

17. Method according to any one of the preceding claims, **characterized in that** it is configured to provide double-page reading based on a page translation.

18. Method according to any one of the preceding claims, **characterized in that** it is configured to provide automatic positioning of a page marker in order to come back to previously consulted information.

19. Method according to any one of the preceding claims, **characterized in that** it moreover comprises generation of a book of documents from a search carried out within a media library.

20. Method according to any one of the preceding claims, **characterized in that** it is configured to provide consultation of a search result in the form of vignettes.

21. Method according to any one of the preceding claims, **characterized in that** it is configured to allow searching for items of information which are segmented by level.

22. Method according to any one of the preceding claims, **characterized in that** it moreover comprises incremental generation of books and of long-lived data from electronic data originating from "Push"-type mechanisms.

23. Method according to any one of the preceding claims, **characterized in that** it is configured to provide a sheet or a loose-leaf divider making it possible to keep information on the screen during the consultation of other information accessed from hypertext links or by any other mechanism.

24. Method according to any one of the preceding claims, **characterized in that** it provides a classification mode based on the number 7.

25. Method according to any one of the preceding claims, **characterized in that** it is configured to provide annotation of electronic mail.

26. Method according to any one of the preceding claims, **characterized in that** it employs a multi-mode icon.

27. Method according to any one of the preceding claims, **characterized in that** it is configured to provide an identification of the freshness of an item of information consulted and/or stored.

28. Method according to any one of the preceding claims, **characterized in that** it is configured to generate one or more temporary icons or tabs for loading of electronic data.

## Patentansprüche

1. Verfahren zum Organisieren und Abfragen von elektronischen Dokumenten, die von einer Vielzahl von Datenquellen kommen und in verschiedenen Formaten geliefert werden, an einem Arbeitsplatz, umfassend:
- eine Visualisierung dieser elektronischen Dokumente in einer graphischen Darstellung, die die Metapher des Buches verwendet, und
- eine Erzeugung einer Menge von elektronischen Büchern, die dafür ausgelegt sind, diese Dokumente in Form von Seiten zu referenzieren und zu visualisieren, **dadurch gekennzeichnet, daß** es außerdem Zugangsfunktionen zur Struktur jedes elektronischen Buchs umfaßt, die in Form von Systemseiten ausgeführt sind und die von den Zugangsfunktionen zu den durch die Seiten dieses elektronischen Buchs referenzierten Inhalten verschieden sind.

2. Verfahren nach Anspruch 1, **gekennzeichnet durch** die Verwendung einer Menge von elektronischen Verwaltungsbüchern, die **durch** den Arbeitsplatz gesteuert werden und in eine Bibliothek abgelegt sind, wobei diese elektronischen Verwaltungsbücher ausführbare Seiten zur Durchführung der Operationen der Bildung, der Aktualisierung und der Abfragung dieser elektronischen Bücher umfassen.

3. Verfahren nach einem der Ansprüche 1 oder 2, **dadurch gekennzeichnet, daß** die Menge von elektronischen Verwaltungsbüchern einen Katalog umfaßt, der einen Schlüsselwortkatalog und eine Thesaurus einschließt.

4. Verfahren nach Anspruch 3, **dadurch gekennzeichnet, daß** der Katalog außerdem eine Abonnementliste einschließt, um elektronische Dokumente zu empfangen, die von zweckbestimmten Quellen kommen ("push").

5. Verfahren nach einem der Ansprüche 2 bis 4, **dadurch gekennzeichnet, daß** die Menge von elektronischen Verwaltungsbüchern außerdem ein elektronisches Präferenzenbuch umfaßt, das eine Menge von Parametern zur Konfigurierung und Personalisierung dieses Verfahrens einschließt

6. Verfahren nach einem der Ansprüche 2 bis 5, **dadurch gekennzeichnet, daß** die Menge der elektronischen Verwaltungsbücher außerdem ein elektronisches Hilfebuch umfaßt.

7. Verfahren nach einem der Ansprüche 2 bis 6, **dadurch gekennzeichnet, daß** die Menge der elektronischen Verwaltungsbücher außerdem ein eMail-Buch umfaßt, das dafür legt ist, Funktionalitäten einer eMail-Software zu liefern und eine eMail in einem der in der Bibliothek abgelegten elektronischen Bücher abzulegen.

8. Verfahren nach einem der vorhergehenden Ansprüche, **dadurch gekennzeichnet, daß** es in eine Bibliothek ein oder mehrere elektronische Arbeitsbücher verwendet, die Büchern entsprechen, in denen Operationen der Einfügung, der Löschung oder der Abfrage von elektronischen Dokumenten stattfinden.

9. Verfahren nach einem der vorhergehenden Ansprüche, **dadurch gekennzeichnet, daß** es dafür ausgelegt ist, einen Visualisierungsmodus in der Form einer Mediathek zu liefern, die einen Zugang zu den von individuellen aufgeteilten Bibliotheken stammenden Informationen liefert.

10. Verfahren nach einem der vorhergehenden Ansprüche, **dadurch gekennzeichnet, daß** es außerdem dafür ausgelegt ist, einen Visualisierungsmodus in der Form eines Lesepults zu liefern, das für eine Ablage der laufenden Daten und eine Vorvisualisierung dieser Daten vorgesehen ist.

11. Verfahren nach Anspruch 10, **dadurch gekennzeichnet, daß** es außerdem dafür ausgelegt ist, einen Miniaturvisualisierungsmodus der auf das Lesepult aufgelegten Bücher zu liefern.

12. Verfahren nach einem der vorhergehenden Ansprüche, **dadurch gekennzeichnet, daß** es ferner dafür ausgelegt ist, einen Visualisierungsmodus in der Form eines Notizbuchs zu liefern, das für eine Abfrage und eine Ablage von Informationen vorgesehen ist, die sich auf ein gegebenes Thema beziehen.

13. Verfahren nach einem der vorhergehenden Ansprüche, **dadurch gekennzeichnet, daß** es ferner dafür ausgelegt ist, eine Visualisierung in der Form einer Sortiermaschine liefern, die für eine Umorganisierung und eine Abfrage in Form von Vignetten von ein bestimmtes Thema betreffenden Daten vorgesehen ist.

14. Verfahren nach einem der vorhergehenden Ansprüche, **dadurch gekennzeichnet, daß** es außerdem eine Vorvisualisierung der abzufragenden Dokumente in der Form eines Buches umfaßt.

15. Verfahren nach einem der vorhergehenden Ansprüche, **dadurch gekennzeichnet, daß** es ferner Zugangsmethoden nach Dokumententyp umfaßt, die eine Identifizierung durch Lokalisierung umfassen.

16. Verfahren nach einem der vorhergehenden Ansprüche, **dadurch gekennzeichnet, daß** es dafür ausgelegt ist, eine Identifizierung des Modus eines Buchs durch das Aussehen seiner Bindung zu liefern.

17. Verfahren nach einem der vorhergehenden Ansprüche, **dadurch gekennzeichnet, daß** es dafür ausgelegt ist, eine Doppelseitenlesung zu liefern, die auf einer Seitenübertragung beruht.

18. Verfahren nach einem der vorhergehenden Ansprüche, **dadurch gekennzeichnet, daß** es dafür ausgelegt ist, eine automatische Positionierung eines Seiteneinmerkers zu liefern, um zu zuvor abgefragten Informationen zurückzukehren.

19. Verfahren nach einem der vorhergehenden Ansprüche, **dadurch gekennzeichnet, daß** es außerdem eine Erzeugung eines Dokumentenbuchs ausgehend von einer in eine Mediathek vorgenommenen Suche umfaßt.

20. Verfahren nach einem der vorhergehenden Ansprüche, **dadurch gekennzeichnet, daß** es dafür ausgelegt ist, eine Abfrage eines Suchergebnisses in der Form von Vignetten zu liefern.

21. Verfahren nach einem der vorhergehenden Ansprüche, **dadurch gekennzeichnet, daß** es dafür ausgelegt ist, eine Suche von in Niveaus segmentierten Informationen zu gestatten.

22. Verfahren nach einem der vorhergehenden Ansprüche, **dadurch gekennzeichnet, daß** es außerdem eine inkrementale Erzeugung von beständigen Büchern und Daten aus elektronischen Daten, die von Mechanismen vom Typ "Push" kommen, umfaßt.

23. Verfahren nach einem der vorhergehenden Ansprüche, **dadurch gekennzeichnet, daß** es dafür ausgelegt ist, ein Blatt oder eine fliegende Einlage zu liefern, die die Beibehaltung einer Information auf dem Bildschirm während der Abfrage anderer Informationen zu gestatten, auf die von Hypertextlinks aus oder durch jeden anderen Mechanismus zugegriffen wird.

24. Verfahren nach einem der vorhergehenden Ansprüche, **dadurch gekennzeichnet, daß** es einen Einordnungsmodus liefert, der auf der Ziffer 7 beruht.

25. Verfahren nach einem der vorhergehenden Ansprüche, **dadurch gekennzeichnet, daß** es dafür ausgelegt ist, eine Annotierung von eMails zu liefern.

26. Verfahren nach einem der vorhergehenden Ansprüche, **dadurch gekennzeichnet, daß** es ein Multimodus-Symbol verwendet.

27. Verfahren nach einem der vorhergehenden Ansprüche, **dadurch gekennzeichnet, daß** es dafür ausgelegt ist, eine Identifizierung der Frische einer abgefragten und/oder einer gespeicherten Information zu liefern.

28. Verfahren nach einem der vorhergehenden Ansprüche, **dadurch gekennzeichnet, daß** es dafür ausgelegt ist, ein oder mehrere vorübergehende Ladesymbole von elektronischen Daten zu erzeugen.
